# EUROPÄISCHE PATENTSCHRIFT

(11) **EP 2 314 644 B1**
(45) Veröffentlichungstag und Bekanntmachung des Hinweises auf die Patenterteilung: **22.08.2012**
(21) Anmeldenummer: 10195079.8
(22) Anmeldetag: 24.08.2007
(51) Int. Cl.: C08L 77/06, C08L 77/10, C08G 69/26, C08G 69/36, C08K 7/14

(54) **Mit flachen Glasfasern verstärkte Hochtemperatur-Polyamidformmassen**
High temperature polyamide moulding composition reinforced with flat glass fibres
Masse de formage à base de polyamide à haute température renforcée par des fibres de verre plates

(43) Veröffentlichungstag der Anmeldung: 27.04.2011
(62) Teilanmeldung aus: 07016687.1
(73) Patentinhaber: EMS-Patent AG, 7013 Domat/Ems (CH)
(72) Erfinder: Harder, Philipp, 7000, Chur (CH); Jeltsch, Thomas, 7013, Domat/ Ems (CH); Lamberts, Nikolai, 7402, Bonaduz (CH)
(74) Vertreter: Bremi, Tobias Hans

(56) Entgegenhaltungen:
- EP-A- 1 693 418
- EP-A1- 1 988 113
- DATABASE WPI Week 199513 Thomson Scientific, London, GB; AN 1995-094008 XP002471131, -& JP 7 018186 A (NITTO BOSEKI CO LTD) 20. Januar 1995 (1995-01-20)
- DATABASE WPI Week 200615 Thomson Scientific, London, GB; AN 2006-142410 XP002471132, -& JP 2006 045390 A (NITTO BOSEKI CO LTD) 16. Februar 2006 (2006-02-16)

## Beschreibung

Die vorliegende Erfindung betrifft verstärkte Polyamidformmassen, enthaltend hochschmelzende, teilaromatische Polyamide und flache Glasfasern, insbesondere mit einem rechteckigen Querschnitt, d.h. Glasfasern mit nicht kreisförmiger Querschnittsfläche und einem Abmessungsverhältnis von der Haupt-Querschnittsachse zur Neben-Querschnittsachse von 2 bis 6, insbesondere 3 bis 6, ganz besonders bevorzugt von 3,5 bis 5,0. Die vorliegende Erfindung betrifft weiterhin ein Verfahren zur Herstellung der Polyamidformmassen sowie daraus gefertigte Formteile, d. h. insbesondere Spritzgussteile. Die erfindungsgemässen Formteile weisen eine hohe Quersteifigkeit und Querfestigkeit auf.

Unter hochschmelzenden Polyamiden wird erfindungsgemäß ein Polyamid mit einem Schmelzpunkt von wenigstens 270°C (DSC, ISO 11357) verstanden. Die erfindungsgemäß zu verwenden Polyamide haben einen HDT A (1,8 MPa) von wenigstens 260°C, wenn sie mit mindestens 50 Gew.-% Glasfasern verstärkt sind.

Verstärkte Polyamide spielen eine zunehmende Rolle im Bereich der technischen Konstruktionswerkstoffe, da sie neben hoher Steifigkeit, eine gute Zähigkeit und Wärmeformbeständigkeit zeigen. Einsatzgebiete sind, z. B. Innen- und Außenteile im Automobilsektor und im Bereich von anderen Transportmitteln, Gehäusematerial für Geräte und Apparate für die Telekommunikation, Unterhaltungselektronik, Haushaltsapparate, Maschinenbauapparate, Apparate im Heizungsbereich und Befestigungsteile für Installationen. Wichtig sind bei Teilen z. B. im Automobilsektor metallähnliche Eigenschaften, die aber nur durch hochgefüllte, verstärkte Formmassen erzielt werden. Bei dünnwandigen Teilen ist insbesondere eine hohe Fliesslänge der Formmassen notwendig, die allerdings bei mit konventionellen Kurz- und Langglasfasern verstärkten Formmassen nicht oder sehr schlecht erzielt werden kann.

Der besondere Vorteil von verstärkten Polyamiden liegt außerdem im außergewöhnlich guten Verbund zwischen Polymermatrix und Verstärkungsstoffen. Dies gilt auch bei hohen Verstärkungsgraden, die zu Produkten mit hohem Zug-E-Modul führen. Die Zähigkeit, die Querfestigkeit und -steifigkeit sowie der Verzug und die Verarbeitbarkeit der Produkte des Standes der Technik genügen allerdings nicht allen Anforderungen, insbesondere dann nicht, wenn gleichzeitig eine hohe Temperatur- und Wärmeformbeständigkeit gefordert wird.

Im folgenden sollen in der vorliegenden Anmeldung unter Polyamiden solche Polymere verstanden werden, deren Grundbausteine durch Amid-Bindungen (-NH-CO-) zusammengehalten werden und die sich durch Polykondensation oder Polymerisation aus Monomeren, wie z.B. Dicarbonsäuren, Dicarbonsäurehalogeniden, Dinitrilen, Diaminen, Aminocarbonsäuren und/oder Lactamen, herstellen lassen. Es kann sich dabei um Homo-oder Copolyamide oder Mischungen davon handeln. Das Zahlenmittel der Molmasse der Polyamide sollte über 5.000, vorzugsweise über 8.000 aber unter 30.000, insbesondere unter 20.000 g/mol liegen, entsprechend Lösungsviskositäten von von ηᵣₑₗ kleiner 1,9, besonders bevorzugt von ηᵣₑₗ kleiner 1,8 (gemessen in m-Kresol, 0,5 Gew.-%, 20°C).

EP 0 196 194 B1 beschreibt einen Strang, bestehend aus einer Vielzahl von Einzelfilamenten aus Glas, die einen nicht kreisförmigen Querschnitt aufweisen, sowie deren Herstellung. Der Querschnitt der Glasfasern kann oval, elliptisch, elliptisch mit Einschnürung(en) (sogenannte Kokon- oder "cocoon"-Faser) oder polygonal sein.

EP 0 246 620 B 1 beschreibt einen Gegenstand aus einem glasfaserverstärkten thermoplastischen Kunststoff, wobei die Glasfasern einen rechteckigen, elliptischen oder hüllenförmigen (cocoon-shaped) Querschnitt aufweisen. Unter "hüllenförmigem" Querschnitt werden in der EP 0 246 620 B 1 Glasfasern mit einer länglichen oder ovalen Gestalt oder einer gebogenen Gestalt, jeweils mit einem eingeschnürten Abschnitt, verstanden. Diese Glasfasern weisen ein Aspektverhältnis von 2 auf.

EP 0 376 616 B 1 beschreibt eine thermoplastische Polymerzusammensetzung, umfassend einen thermoplastischen Kunststoff und 1 bis 65 % einer faserartigen Verstärkung mit einem nicht kreisförmigen Querschnitt, wobei die Querschnittsfläche und das Verhältnis der senkrecht zueinander stehenden Querschnittsachsen der Verstärkungsfasern näher charakterisiert sind. Der Querschnitt der Verstärkungsfasern weist eine gekrümmte oder halbrunde Kontur auf. Die Zusammensetzung zeichnet sich durch eine hohe Dimensionsstabilität und geringeren Verzug aus.

Zur Reduktion des Verzugs von thermoplastisch hergestellten Formteilen wird gemäß JP 10219026 A2 die Thermoplastmatrix mit einer Mischung aus Glasfasern mit kreisförmigem Querschnitt und Glasfasern mit flachem Querschnitt verstärkt. Im einzigen Beispiel dieses Dokuments wird Polyamid 66 als Polymermatrix aufgeführt.

JP 2006045390 A2 beschreibt ein langglasfaserverstärktes Granulat, bestehend aus einer thermoplastischen Matrix und bis zu 60 Gew.-% Glasfasern mit flachem Querschnitt. Granulat- und Faserlänge sind identisch. Vorteilhafte Eigenschaften der aus der verstärkten Zusammensetzung gemäß JP 2006045390 A2 hergestellten Formteile sind eine gute Oberflächenqualität und hohe Schlagzähigkeit.

JP 8259808 A2 beschreibt Polyamidformmassen aus 50 bis 80 Gew.-% eines Polyamidharzes, vorzugsweise eines Polyamid 6 mit einer relativen Viskosität von 2,5 bis 4,0 und 20 bis 50 Gew.-% flachen Fasern sowie gegebenenfalls bis zu 30 Gew.-% eines Füllstoffes.

JP 7018186 beschreibt eine thermoplastische Harzzusammensetzung, die mit einem Pulver flacher Glasfasern verstärkt ist.

EP 1 788 026 B1 beschreibt verstärkte Polyamidformmassen aus einem Blend aus Polyamid 66 und einem Copolyamid 6T/6I. Als Verstärkungsmaterial wird eine Mischung aus Glasfasern und Kohlenstofffasern eingesetzt.

Aus der EP 1988113, einem Dokument des Standes der Technik nach Art. 54(3), aber nur was bestimmte Gegenstände der Beschreibung angeht, da die Priorität nur teilweise gültig in Anspruch genommen wird, sind Polyamid-Formmassen bekannt mit folgender Zusammensetzung: (A) 30 - 100 Gew.-% wenigstens eines Copolyamids 10T/6T, wobei dieses aufgebaut ist aus (A1) 40 bis 95 Mol-% 10T-Einheiten, gebildet aus den Monomeren 1,10-Decandiamin und Terephthalsäure, (A2) 5 bis 60 Mol-% 6T-Einheiten, gebildet aus den Monomeren 1,6-Hexandiamin und Terephthalsäure; (B) 0 - 70 Gew.-% Verstärkungsund/oder Füllstoffe; (C) 0 - 50 Gew.-% Additive und/oder weitere Polymere,wobei die Komponenten A bis C zusammen 100% ergeben.

Es ist daher Aufgabe der vorliegenden Erfindung, neue verstärkte Polyamidformmasse auf Basis von hoch schmelzenden Polemiken, d.h. mit Schmelzpunkten von wenigstens 270 °C zur Verfügung zu stellen, die den Formmassen mit Glasfasern mit kreisförmigen Querschnitt hinsichtlich der Wärmeformbeständigkeit, der mechanischen und VerarbeitungsEigenschaften deutlich überlegen sind. Die aus den Formmassen hergestellten Formteile sollen außerdem eine hohe Quersteifigkeit und Querfestigkeit aufweisen.

Die obige Aufgabe wird durch die Polyamidformmassen gemäß Anspruch 1, das Verfahren gemäß Anspruch 11, die Verwendung gemäß Anspruch 12, das Verfahren zur Herstellung der Formkörper gemäß Anspruch 13 sowie durch die Formkörper, insbesondere die Spritzgussteile gemäß Anspruch 14 gelöst.

In den Unteransprüchen sind vorteilhafte Ausführungsformen der Erfindung enthalten.

Es wurde erfindungsgemäß festgestellt, dass flache Glasfasern, insbesondere solche mit rechteckigem Querschnitt, d.h. mit nicht kreisförmigem Querschnitt (Verhältnis der Querschnittsachsen ≥ 2, insbesondere ≥ 3) im Vergleich zu solchen mit kreisförmigem Querschnitt (wie z. B. übliche Schnittglasfasern, die üblicherweise einen kreisförmigen Querschnitt aufweisen) deutliche Vorteile in den mechanischen Eigenschaften, der Verarbeitung und der Oberflächenqualität zeigen. Dies gilt insbesondere bei hohen Glasfasergehalten von ≥ 50%.

Wenn im folgenden von rechteckigen bzw. rechtwinkligen Glasfasern gesprochen wird, bedeutet dies, dass der Querschnitt der Glasfasern rechtwinklig oder nahezu rechtwinklig ist oder ein abgerundetes Rechteck darstellt, dergestalt, dass die langen Seiten des Rechteckes nahezu parallel zueinander ausgerichtet und die kurzen Seiten des Rechteckes an den Enden gebogen oder als ganzes gebogen sind, wobei im letzteren Fall die kurzen Seiten ähnlich den Segmenten von Ellipsen oder Kreisen ausgeformt sind. Im Vergleich zu den "cocoon"-Fasern zeigt der Querschnitt der rechtwinkligen Glasfasern keine Einschnürungen.

So wird erfindungsgemäß in PA6T/61 (70:30)-Formmassen bei 60 Gew.-% Glasfasern bei sonst gleicher Rezeptur mit flachen Glasfasern eine nahezu doppelt so hohe Kerbschlagzähigkeit wie bei der Verwendung von Glasfasern mit kreisförmiger Geometrie gefunden. Diese hohen Zähigkeitswerte werden auch erhalten, wenn ein PA6T/6I (70:30) mit niedriger Molmasse ηᵣₑₗ = 1,57) eingesetzt wird. Ein PA6T/61 (70:30) mit niedriger Molmasse besitzt eine niedrige Schmelzviskosität und damit Vorteile für die Spritzgussverarbeitung.

Üblicherweise werden bei Polyamiden mit niedrigen Molmassen tiefere Zähigkeitswerte gefunden als bei solchen mit höheren Molmassen. Bei hohen Füllgraden wird allerdings durch eine größere Viskosität der höher molekularen Polyamide die thermoplastische Verarbeitung erschwert. Dies äußert sich in erschwerter Formfüllung, Einfallstellen und schlechter Oberflächenqualität.

Es wurde nun erfindungsgemäß festgestellt, dass besonders bei hohen Anteilen von flachen Glasfasern (50 Gew.-% und darüber) sich mit den erfindungsgemäßen Formmassen, insbesondere mit tiefviskosen, teilaromatischen Polyamiden, besonders bevorzugt mit tiefviskosem PA6T/61 oder PA6T/66, Produkte herstellen lassen, die sich durch eine gute Verarbeitbarkeit, geringen Verzug, hohe Oberflächengüte und wesentlich höhere Zähigkeit als solche Materialien auszeichnen, die Glasfasern enthalten, die einen kreisförmigen Querschnitt besitzen.

Im Vergleich zu Glasfasern mit kreisförmigen Querschnitts erlauben Glasfasern mit einem Querschnitt, dessen Haupt- und Nebenachse unterschiedliche Werte aufweisen (flache Glasfasern), eine merklich höhere Packungsdichte bei hohen Verstärkungsgraden, wodurch höhere Moduli und Festigkeiten, insbesondere quer zur Faserrichtung resultieren. Die zu erwartende Verbesserung hinsichtlich Steifigkeit und Festigkeit kommt aber nur dann in vollem Umfang zum tragen, wenn die tendenziell kleineren Räume zwischen den flachen Glasfasern mit Polymermatrix ausreichend infiltriert werden und die Matrix ein hinreichendes Weiterleiten der auftretenden Kräfte bei Deformation ermöglicht. Erst die erfindungsgemäß eingesetzten Polyamide mit tiefer Viskosität schöpfen das Potential der geometrisch vorteilhaften, flachen Glasfasern voll aus.

Gerade Bauteile die während der Anwendung unter Druckbelastung stehen, wie z.B. Druckmesser-, Ventil- oder Wasserzählergehäuse, profitieren von der erhöhten Steifigkeit und Festigkeit quer zur Faserausrichtung, weil hierdurch u. a. der Berstdruck und die Formhaltigkeit verbessert werden. Aufgrund der höheren Quersteifigkeit der aus den erfindungsgemäßen Formmassen gefertigten Bauteile, welche je nach Zusammensetzung um 10 bis 40% über dem Niveau der Formmassen mit Glasfasern kreisförmigen Querschnitts liegt, ergeben sich deutlich geringere Deformationen des Bauteils unter wechselnder Druckbelastung. Dies ist von besonderem Interesse, da gerade Formmassen auf Basis teilaromatischer Polyamide, insbesondere solche, die überwiegend Terephthalamid-Einheiten ((6T)-Einheiten) enthalten, verstärkt mit üblichen Glasfasern kreisförmigen Querschnitts eine im Vergleich mit der Längssteifigkeit geringe Quersteifigkeit aufweisen. Noch stärker ins Gewicht fallen bei der Formteilgestaltung die gegenüber der Längsfestigkeit deutlich niedrigeren Querfestigkeiten. Dieser Mangel kann durch Verwendung von flachen Glasfasern in Kombination mit niederviskosen Polyamiden ausgeglichen werden, da hierdurch nicht nur die einzelnen Werte für die Längs- und Quersteifigkeit sowie für die Längs- und Querfestigkeit, sondern auch das Verhältnis der Quer- zur Längssteifigkeit sowie das Verhältnis der Quer- zur Längsfestigkeit erhöht werden. Die Quersteifigkeit und -festigkeit werden senkrecht zur Verarbeitungsrichtung und damit auch senkrecht zur Glasfaserausrichtung im Formteil bestimmt.

Die erfindungsgemäß eingesetzte Matrix der Polyamidformmassen basiert auf mindestens einem hochschmelzenden Polyamid (Komponente (A)), welches einen Schmelzpunkt von wenigstens 270°C und einen HDT A von wenigstens 260°C (bei einem Verstärkungsgrad von wenigstens 50 Gew.-%) besitzt.

Das hochschmelzende Polyamid (Komponente (A)) hat eine Lösungsviskosität, gemessen in m-Kresol (0,5 Gew.-%, 20°C) von ηrel kleiner 1,9, insbesondere von ηᵣₑₗ kleiner 1,8.

In Frage kommt als hochschmelzendes Polyamid ein Polyamid auf Basis von aromatische Dicarbonsäuren und aliphatischen Diaminen. Ein Teil der aromatischen Dicarbonsäuren kann durch aliphatische und/oder cycloaliphatische Dicarbonsäuren, ein Teil der aliphatischen Diamine kann durch cycloaliphatische und/oder araliphatische Diamine ersetzt werden. Ein teilweiser Ersatz der Dicarbonsäuren und der Diamine kann auch durch Lactame und/oder Aminocarbonsäuren erfolgen.

Somit werden die hochschmelzenden Polyamide aus folgenden Komponenten gebildet:
(A₁) Dicarbonsäuren:
   50 - 100 Mol-% Terephthalsäure, bezogen auf den Gesamtgehalt an anwesenden Säuren,
   0 - 50 Mol-% einer anderen aromatischen Dicarbonsäure mit 8 bis 20 Kohlenstoffatomen, und/oder 0 - 50 Mol-% einer aliphatischen Dicarbonsäure mit 6 bis 36 Kohlenstoffatomen, und/oder 0 - 50 Mol-% einer cycloaliphatischen Dicarbonsäure mit 8 bis 20 Kohlenstoffatomen,
(A₂) Diaminen:
   50 - 100 Mol-% mindestens eines Diamins, ausgewählt aus der Gruppe aus 1,6-Hexandiamin, 2-Methyl-1,5-pentandiamin, 1,7-Heptandiamin, 1,8-Octandiamin, 1,11-Undecandiamin, 1,12-Dodecandiamin, MACM, PACM, 1,3-Bis-(Aminomethyl)-cyclohexan und MXDA, bezogen auf den Gesamtgehalt an anwesenden Diaminen, 0 - 50 Mol-% anderer aliphatischer Diamine, und/oder
   0- 50 Mol-% anderer cycloaliphatischer Diamine mit 6 bis 20 Kohlenstoffatomen, und/oder
   0-50 Mol-% araliphatische Diamine MXDA, PXDA,
      wobei in den hochschmelzenden Polyamiden der prozentuale Molgehalt an Dicarbonsäuren 100% und der prozentuale Molgehalt an Diaminen 100% ausmacht, und gegebenenfalls aus:
(A₃) Aminocarbonsäuren und/oder Lactamen, enthaltend
   0 - 100 Mol-% Lactame mit 6 bis 12 Kohlenstoffatomen, und/oder
   0 - 100 Mol-% Aminocarbonsäuren mit 6 bis 12 Kohlenstoffatomen.

Während die Komponenten (A₁) und (A₂) weitgehend äquimolar eingesetzt werden, beträgt die Konzentration von (A₃) höchstens 35 Gew.-%, bevorzugt höchstens 25 Gew.-%, insbesondere höchstens 20 Gew.-% bezogen auf die Summe von (A₁) bis (A₃).

Zusätzlich zu den weitgehend äquimolar eingesetzten Komponenten A₁ und A₂ können Dicarbonsäuren (A₁) oder Diamine (A₂) zur Regelung der Molmasse oder zum Ausgleich von Monomerverlusten bei der Polyamidherstellung eingesetzt werden, sodass in ihrer Gesamtheit die Konzentration einer Komponente A₁ oder A₂ überwiegen kann.

Ein Teil der Terephthalsäure (TPS) kann bis zu 50 Mol-%, bevorzugt bis zu 48 Mol-% und insbesondere zu 46 Mol-% durch andere aromatische, aliphatische oder cycloaliphatische Dicarbonsäuren mit 6 bis 36 Kohlenstoffatomen (bezogen auf die Gesamtmenge der Dicarbonsäuren) ersetzt sein. Zu den geeigneten aromatischen Dicarbonsäuren zählen die Naphthalindicarbonsäure (NDA) und die Isophthalsäure (IPS). Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimersäure. Geeignete cycloaliphatische Dicarbonsäuren sind die cis-und/oder trans-Cyclohexan-1,4-dicarbonsäure und/oder cis- und/oder trans-Cyclohexan-1,3-dicarbonsäure (CHDA).

Die als Komponente (A₂) zu 50 - 100 Mol-% eingesetzten Diamine sind ausgewählt aus der Gruppe aus 1,6-Hexandiamin, 2-Methyl-1,5-pentandiamin, 1,7-Heptandiamin, 1,8-Octandiamin, 1,11-Undecandiamin, 1,12-Dodecandiamin, MACM, PACM, 1,3-Bis-(Aminomethyl)-cyclohexan und MXDA. Hiervon bevorzugt sind die Diamine 1,6-Hexandiamin, 2-Methyl-1,5-pentandiamin und 1,12-Dodecandiamin, insbesondere 1,6-Hexandiamin.

Die oben genannten, obligatorisch eingesetzten Diamine können in untergeordneter Menge von nicht mehr als 50 Mol-%, von vorzugsweise nicht mehr als 40 Mol-% und insbesondere nicht mehr als 30 Mol-% (bezogen auf die Gesamtmenge der Diamine) durch andere Diamine mit 4 bis 36 Kohlenstoffatome ersetzt sein. Beispiele für lineare oder verzweigte, aliphatische Diamine sind 1,4-Butandiamin, 1,5-Pentandiamin, 1,6-Hexandiamin, 1,7-Heptandiamin, 1,8-Octandiamin (OMDA), 1,9-Nonandiamin (NMDA), 2-Methyl-1,8-octandiamin (MODA), 2,2,4-Trimethylhexamethylendiamin (TMHMD), 2,4,4-Trimethylhexamethylendiamin (TMHMD), 5-Methyl-1,9-nonandiamin, 1,10-Decandiamin, 1,11-Undecandiamin, 2-Butyl-2-ethyl-1,5-pentandiamin, 1,12-Dodecandiamin, 1,13 Tridecandiamin, 1,14-Tetradecandiamin, 1,16-Hexadecandiamin, und 1,18-Octadecandiamin. Als cycloaliphatische Diamine können beispielsweise Cyclohexandiamin, 1,3-Bis-(Aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als araliphatisches Diamin sei m-Xylylendiamin (MXDA) erwähnt.

Zusätzlich zu den beschriebenen Dicarbonsäuren und Diaminen können noch Lactame und/oder Aminocarbonsäuren als polyamidbildende Komponenten (Komponente (A₃)) eingesetzt werden. Geeignete Verbindungen sind beispielsweise Caprolactam (CL), ω-Aminocapronsäure, ω-Aminononansäure, ω-Aminoundecansäure (AUA), Laurinlactam (LL) und ω -Aminododecansäure (ADA). Die Konzentration der zusammen mit den Komponenten A₁ und A₂ eingesetzten Aminocarbonsäuren und/oder Lactame beträgt höchstens 35 Gew.-%, bevorzugt höchstens 25 Gew.-% und besonders bevorzugt höchstens 20 Gew.-%, bezogen auf die Summe der Komponenten A₁ und A₂. Speziell bevorzugte Lactame sind Lactame bzw. α, ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α, ω-Aminosäuren 1,4-Aminobutansäure, 1,6-Aminohexansäure, 1,7-Aminoheptansäure, 1,8-Aminooctansäure, 1,11 -Aminoundecansäure und 1, 12-Aminododecansäure.

Weil Diamine flüchtigere Verbindungen als Dicarbonsäuren sind, entsteht beim Herstellprozess ein Diaminverlust. Beim Verdampfen des Wassers, beim Austrag des Vorkondensats und bei der Nachkondensation in der Schmelze oder in der Festphase geht Diamin verloren. Zum Ausgleich des Diaminverlustes wird deshalb bevorzugt dem Monomeransatz ein Diaminüberschuß von 1 bis 8 Gew.-% bezogen auf die Gesamtmenge der Diamine zugesetzt. Mit dem Diaminüberschuß wird auch das Molekulargewicht und die Verteilung der Endgruppen geregelt. Bei dem angewendeten Verfahren gemäß den Beispielen entsteht bei einem Diaminüberschuß von kleiner als 3% ein Carboxylendgruppenüberschuss von 10 bis 150 mmol/kg. Bei einem Diaminüberschuß von mehr als 3% entsteht ein Aminoendgruppenüberschuss von 10 bis 150 mmol/kg.

Zur Reglung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u. a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Die übliche Einsatzmenge der Regler liegt zwischen 10 und 200 mmol pro kg Polymer.

Die teilaromatischen Copolyamide (A) können mit an sich bekannten Verfahren hergestellt werden. Geeignete Verfahren sind an verschiedener Stelle beschrieben worden, und in der Folge sollen einige der möglichen in der Patentliteratur diskutierten Verfahren angegeben werden, : DE 195 13 940, EP 0 976 774, EP 0 129 195, EP 0 129 196, EP 0 299 444, US 4,831,106, US 4,607,073, DE 14 95 393 und US 3,454,536.

Am gebräuchlichsten, und zur Herstellung der Komponente (A) geeignet, ist die zweistufige Herstellung zuerst eines tiefviskosen, niedermolekularen Vorkondensats und anschließender Nachkondensation in der Festphase oder der Schmelze (z.B. im Extruder). Es ist auch ein dreistufiges Verfahren aus 1. Vorkondensation, 2. Festphasenpolymerisation und 3. Schmelzepolymerisation möglich, wie es in DE 696 30 260 angegeben ist.

Für Produkte mit Schmelzpunkten unter 300°C eignet sich auch das beispielsweise in US 3,843,611 und US 3,839,296 beschriebene einstufige Batchverfahren, bei dem die Mischung der Monomeren oder deren Salze für 1 bis 16 Stunden auf Temperaturen von 250 bis 320°C aufgeheizt werden und der Druck von einem Maximum unter Abdampfen von gasförmigen Material gegebenenfalls mit Hilfe eines Inertgases auf den niedrigsten Druck von bis zu 1 mm Hg reduziert wird.

### Konkrete Vertreter für die erfindungsgemäßen PA

PA 6T/61, PA 6T/66, PA 6T/610, PA 6T/612, PA 6T/12, PA 6T/11, PA 6T/6, PA 6T/10T, PA 6T/101, PA 6T/106, PA 6T/1010, PA 6T/66/106, PA 6T/MACM10, PA 6T/MACM12, PA 6T/MACM18, PA 6T/MACMI, PA MACMT/61, PA 6T/PACM6, PA 6T/PACM10, PA 6T/PACM12, PA 6T/PACM18, PA 6T/PACMI, PACMT/61, PA MPT/MPI, PA MPT/MP6, PA 6T/MPI, PA 6T/9T, PA 6T/12T, PA 6T/61/66, PA 6T/61/6, PA 6T/61/1 2, PA 6T/66/6, PA 6T/66/12, PA 6T/61/MACMI, PA 6T/66/PACM6.

Erfindungsgemäß sind als hochschmelzende Polyamide (A), insbesondere folgende teilaromatische Copolyamide bevorzugt:
- teilkristallines Polyamid, hergestellt aus mindestens 50 Mol-% Terephthalsäure und Hexamethylendiamin, als einzige Diaminkomponente;
- teilkristallines Polyamid, hergestellt aus mindestens 52 Mol-% Terephthalsäure und Hexamethylendiamin;
- teilkristallines Polyamid, hergestellt aus mindestens 54 Mol-% Terephthalsäure und Hexamethylendiamin;
- teilkristallines Polyamid, hergestellt aus mindestens 62 Mol-% Terephthalsäure und Hexamethylendiamin;
- teilkristallines Polyamid, hergestellt aus mindestens 50 Mol-% Terephthalsäure und 2-Methyl-1,5-pentandiamin;
- teilkristallines Polyamid, hergestellt aus mindestens 50 Mol-% Terephthalsäure und einer Mischung aus Hexamethylendiamin und 2-Methyl-1,5-pentandiamin;
- teilkristallines Polyamid, hergestellt aus mindestens 50 Mol-% Terephthalsäure und einer Mischung aus mindestens zwei Diaminen, ausgewählt aus der Gruppe Hexamethylendiamin, Nonandiamin, Methyloctandiamin, und Decandiamin, wobei mindestens 50 Mol-% Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und Dodecandiamin, wobei mindestens 50 Mol-% Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und Trimethylhexamethylendiamin, wobei mindestens 50 Mol-% Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und m-Xylylendiamin, wobei mindestens 50 Mol-% Hexamethylendiamin, bezogen auf den Gesamtdiamingehalt, eingesetzt wird;
- teilkristallines, Polyamid hergestellt aus mindestens 50 Mol-% Terephthalsäure und einer Mischung aus Hexamethylendiamin und Bis-(4-aminocyclohexyl)-methan, wobei mindestens 50 Mol-% Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und Bis-(4-amino-3-methyl-cyclohexyl)-methan, wobei mindestens 50 Mol-% Hexamethylendiamin, bezogen auf den Gesamtdiamingehalt, eingesetzt wird;
- teilkristallines Polyamid 6T/61 mit 50 bis 80 Mol-% Hexamethylenterephthalamid-Einheiten und 20 bis 50 Mol-% Hexamethylenisophthalamid-Einheiten;
- teilkristallines Polyamid 6T/61 mit 55 bis 75 Mol-% Hexamethylenterephthalamid-Einheiten und 25 bis 45 Mol-% Hexamethylenisophthalamid-Einheiten;
- teilkristallines Polyamid 6T/61 mit 62 bis 73 Mol-% Hexamethylenterephthalamid-Einheiten und 25 bis 38 Mol-% Hexamethylenisophthalamid-Einheiten;
- teilkristallines Polyamid 6T/61 mit 70 Mol-% Hexamethylenterephthalamid-Einheiten und 30 Mol-% Hexamethylenisophthalamid-Einheiten;
- teilkristallines Polyamid 6T/66 mit 50 bis 80 Mol-% Hexamethylenterephthalamid-Einheiten und 20 bis 50 Mol-% Hexamethylenadipamid (66)-Einheiten;
- teilkristallines Polyamid 6T/66 mit 50 bis 65 Mol-% Hexamethylenterephthalamid-Einheiten und 35 bis 50 Mol-% Hexamethylenadipamid (66)-Einheiten;
- teilkristallines Polyamid 6T/66 mit 52 bis 62 Mol-% Hexamethylenterephthalamid-Einheiten und 38 bis 48 Mol-% Hexamethylenadipamid (66)-Einheiten;
- teilkristallines Polyamid 6T/66 mit 55 Mol-% Hexamethylenterephthalamid-Einheiten und 45 Mol-% Hexamethylenadipamid (66)-Einheiten;
- teilkristallines ternäres Polyamid 6T/61/66 mit 50 bis 70 Mol-% Hexamethylenterephthalamid- und 5 bis 45 Mol-% Hexamethylenisophthalamid-Einheiten und 5 bis 45 Mol-% Hexamethylenadipamid-(66)-Einheiten;
- teilkristallines PA 6T/6I/X mit mindestens 50 Mol-% Hexamethylenterephthalamid-und 0 bis 40 Mol-% Hexamethylenisophthalamid- und 10 bis 50 Mol-% aliphatische Einheiten der Formel NH-(CH₂)ₙ₋₁-CO-, worin n gleich 6, 11 oder 12 ist;
- teilkristallines PA 6T/61/X mit mindestens 50 Mol-% Hexamethylenterephthalamid-und 10 bis 30 Mol-% Hexamethylenisophthalamid- und 10 bis 40 Mol-% aliphatische Einheiten der Formel -NH-(CH₂)ₙ₋₁-CO-, worin n gleich 6, 11 oder 12 ist;
- teilkristallines ternäres PA 6T/61/X mit 52 bis 73 Mol-% Hexamethylenterephthalamid- und 0 bis 36 Mol-% Hexamethylenisophthalamid- und 12 bis 48 Mol-% aliphatische Einheiten der Formel -NH-(CH₂)ₙ₋₁-CO-, worin n gleich 6, 11 oder 12 ist;
- teilkristallines PA 6T/61/X mit 52 bis 73 Mol-% Hexamethylenterephthalamid- und 10 bis 36 Mol-% Hexamethylenisophthalamid- und 12 bis 38 Mol-% aliphatische Einheiten der Formel -NH-(CH₂)ₙ₋₁-CO-, worin n gleich 6, 11 oder 12 ist;
- Mischungen aus amorphem Polyamid 6T/61 mit höchstens 40 Mol-% Hexamethylenterephthalamid-Einheiten und mindestens 60 Mol% Hexamethylenisophthalamid-Einheiten und einem Überschuss von teilkristallinem Polyamid 6T/61 oder 6T/66 mit mindestens 52 Mol-% Hexamethylenterephthalamid-Einheiten;
- teilaromatisches und teilkristallines Polyamid, das bis zu 26 Mol-% aliphatische Einheiten enthält, die durch Kondensation von dimerisierten Fettsäuren mit bis zu 44 Kohlenstoffatomen und einem aliphatischen oder cycloaliphatischen Diamin, insbesondere mit Hexamethylendiamin herstellbar sind.

In einer ersten Ausführungsform sind die erfindungsgemäß eingesetzten flachen Glasfasern (Komponente (B₁)) Kurzglasfasern mit flacher Gestalt und einer nicht kreisförmigen Querschnittfläche, wobei das Verhältnis der senkrecht aufeinander stehenden Querschnittsachsen größer oder gleich 2, insbesondere größer oder gleich 3 ist, und die kleinere Querschnittsachse eine Länge von ≥ 3 µm aufweist. Es wird insbesondere eine im Querschnitt möglichst rechteckige Glasfaser bevorzugt bei der das Verhältnis der Querschnittsachsen größer 3, insbesondere größer oder gleich 3,5 ist. Die Glasfasern liegen in Form von Schnittglas mit einer Länge von 2 bis 50 mm vor. Die Glasfaserkonzentration in den erfindungsgemäßen Formmassen liegt zwischen 40 und 80 Gew.-%, bevorzugt zwischen 48 und 75 Gew.-%, insbesondere zwischen 48 und 65 Gew.-% und ist in einer besonderen Ausführungsform der Erfindung immer in Mengen von wenigstens 60 Gew.-% vorhanden.

In einer zweiten Ausführungsform sind die erfindungsgemäß eingesetzten flachen Glasfasern Langglasfasern mit flacher Gestalt und einer nicht kreisförmigen Querschnittsfläche, wobei das Verhältnis der senkrecht aufeinander stehenden Querschnittsachsen größer oder gleich 2, insbesondere größer oder gleich 3 ist, und die kleinere Querschnittsachse eine Länge von ≥ 3 µm aufweist. Es wird insbesondere eine im Querschnitt möglichst rechteckige Langglasfaser bevorzugt, bei der das Verhältnis der Querschnittsachsen größer 3, insbesondere größer oder gleich 3,5 ist. Die erfindungsgemäß als Roving (Komponente B₁) eingesetzten Glasfasern weisen einen Durchmesser (kleine Querschnittsachse von 3 bis 20 µm, bevorzugt von 3 bis 10 µm auf. Besonders bevorzugt werden sogenannte flache Glasfasern mit einem Verhältnis der Querschnittsachsen von 3,5 bis 5,0. Insbesondere werden erfindungsgemäß E-Glasfasern verwendet. Neben den bevorzugten E-Glasfasern, werden insbesondere S-Glasfasern eingesetzt, da sie gegenüber den E-Glasfasern eine um 30% höhere Zugfestigkeit besitzen. Es können aber auch alle anderen Glasfasersorten, wie z.B. A-, C-, D-, M, R-Glasfasern oder beliebige Mischungen davon oder Mischungen mit E- und/oder S-Glasfasern eingesetzt werden.

In einer alternativen Ausführungsform der Erfindung werden lediglich flache, im Querschnitt nahezu rechtwinklige Glasfasern mit länglicher Gestalt eingesetzt mit einem Aspektverhältnis, d. h. einem Abmessungsverhältnis von der Haupt-/Querschnittsachse zur Neben-/Querschnittsachse von 2 bis 6, insbesondere 3 bis 6, ganz besonders bevorzugt von 3,5 bis 5,0. Kokonförmige Glasfasern oder sogenannte Glasfasergespinste (Kokon- oder "cocoon"-Fasern), d. h. Glasfasern mit einer länglichen oder ovalen Gestalt oder einer gebogenen Gestalt mit mindestens einem eingeschnürten Abschnitt werden in dieser Ausführungsform nicht eingesetzt.

In einer weiteren alternativen erfindungsgemäßen Ausführungsform können die erfindungsgemäß eingesetzten flachen Glasfasern im Gemisch mit Kohlenstofffasern (Carbonfasem, Graphitfasern) vorliegen. Durch Austausch eines Teils der Glasfasern durch Kohlenstofffasern entsteht somit ein hybridfaserverstärkter Compound, dessen Steifigkeit im Vergleich zu reinen Glasfasern erhöht ist. Das Gemisch aus Glas- und Kohlenstofffasern kann ein Gewichtsverhältnis von Glasfaser/ Kohlenstofffasern von 70/ 30 bis 97/3, insbesondere von 80/20 bis 95/5 aufweisen.

Die erfindungsgemäßen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden, wobei besonders gute Eigenschaften des Formteils mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass Schnecken mit großem Durchmesser und tiefem Kompressionsverhältnis, insbesondere kleiner 2, und großzügig dimensionierte Düsen- und Angusskanäle bevorzugt zum Einsatz kommen. Ergänzend sollte dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug-E-Modul, der Reissfestigkeit und der Kerbschlagzähigkeit erreicht.

Die beim Pultrusionsverfahren eingesetzten Endlos-Kohlefasern weisen einen Durchmesser von 5 bis 10 µm, bevorzugt 6 bis 8 µm auf.

Zur Beschleunigung der Faserimprägnierung können die Fasern auf Temperaturen bis 400°C mit Hilfe einer geeigneten IR-, Kontakt-, Strahlungs- oder Heißgasvorwärmung vorgeheizt werden. Vorrichtungen mit Spreizoberflächen innerhalb der Imprägnierkammer sorgen für eine vollständige Imprägnierung der Fasern mit der Polymerschmelze. Aus der Imprägniereinheit austretende Stränge können durch kontrollierte Walzensysteme geformt werden, so dass Granulat mit kreisförmigem, elliptischem oder rechteckigem Querschnitt erhalten wird.

Zur Verbesserung der Matrixanbindung und des Faserhandlings können die Fasern mit chemisch unterschiedlichen Schichten, wie sie für Glas- und Kohlefasern im Stand der Technik bekannt sind, beschichtet sein.

Überraschenderweise ist es erfindungsgemäß gelungen, auch bei Verwendung von Schnittglas hohe Kerbschlagwerte zu erzielen, die sonst nur bei Langfaserverstärkung und Polyamiden mit hohen Molekulargewichten beobachtet werden. Erfindungsgemäß erzielt man hohe Kerbschlagzähigkeitswerte, insbesondere bei hohen Verstärkungswerten: Kerbschlagszähigkeitswerte von größer 20 kJ/m² bei einem Glasfaseranteil von 50 bis 60 Gew.-%, Kerbschlagzähigkeiten von größer 23 kJ/m² bei einem Glasfaseranteil von über 60 Gew.-%.

Weiterhin erzielt man erfindungsgemäß hohe Fliesslängen, insbesondere bei den aus den Formmassen hergestellten dünnwandigen (Spritzguss) Teilen: Fliesslängen von > 120 mm bei Verstärkungsgraden von ≤ 65 Gew.-%. Bei zusätzlichem Einsatz von inneren und/oder äußeren Gleitmitteln können aber durchaus bedeutend höhere Fliesslängen realisiert werden, wie das Beispiel 11 zeigt.

Optional können weitere Füll- und Verstärkungsstoffe den Formmassen (Komponente (B₂ bis B₄)) in Mengen von 0 bis 30 Gew.-% zugesetzt sein. Als bevorzugte weitere Verstärkungsstoffe seien beispielhaft Kohlenstofffasern (Carbonfasern, Graphitfasern), Borfasern, Aramid- (p- oder m-Aramidfasern (z.B. Kevlar® oder Nomex®, DuPont) oder deren Gemische) und Basaltfasern und Glasfasern mit rundem Querschnitt oder deren Gemische genannt, wobei die genannten Verstärkungsfasern als Kurz- oder Langfasern, auch in Form einer Mischung von verschiedenen Fasern eingesetzt werden können.

Als Komponente (B₂) können die erfindungsgemäßen thermoplastischen Formmassen vorzugsweise einen teilchenförmigen Füllstoff oder eine Mischung aus zwei oder mehr unterschiedlichen Füllstoffen auch in Kombination mit Verstärkungsstoffen enthalten. Beispielsweise kommen mineralische teilchenförmige Füllstoffe auf Basis von Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenem Glas, insbesondere gemahlene, flache Glasfasern, dauerhaft magnetische bzw. magnetisierbare Metallverbindungen und/oder Legierungen in Frage. Die Füllstoffe können auch oberflächenbehandelt sein.

Die erfindungsgemäßen Formmassen können aber auch weitere Zusatzstoffe (C), wie z. B. aus der Gruppe der anorganischen Stabilisatoren, wie z.B. Kupferhalogenide, organischen Stabilisatoren, Gleitmittel, Farbstoffe, Nukleierungsmittel, metallischen Pigmente, Metallflitter, metallbeschichtete Partikel, halogenhaltigen Flammschutzmittel, halogenfreien Flammschutzmittel, Schlagzähmodifikatoren, weitere Polymere, wie z.B. Polyphenylenoxid, Polyphenylensulfid, Antistatika, Leitfähigkeitsadditive, Entformungsmittel, optischen Aufheller, natürlichen Schichtsilikate, synthetischen Schichtsilikate oder Gemische der genannten Zusatzstoffe enthalten.

Bestimmte Zusatzstoffe beeinflussen die Fliessfähigkeit der Formmassen und damit die Verarbeitung zu Formteilen negativ, so dass die Zusammensetzung der Formmassen hinsichtlich des Verstärkungsgrades rasch an ihre Grenzen stößt. Durch Verwendung der flachen Glasfasern, insbesondere der Glasfasern mit nahezu rechtwinkligem Querschnitt kann aber die Fliessfähigkeit von z.B. flammgeschützten Formmassen auch bei hohen Verstärkungsgraden befriedigend eingestellt werden. So sind z.B. mit Phosphinsäuresalzen und/oder Diphosphinsäuresalzen, insbesondere den Aluminium- und Calciumphosphinaten, und gegebenenfalls Melaminpolyphosphat flammfest ausgerüstete PA 6T/61 Formmassen (Brandklassierung gemäß UL-94: V0 bei 0,8mm dicken Probekörper) auch bei Verstärkungsgraden von 50 bis 60 Gew.-% noch gut verarbeitbar und weisen eine gute Oberfläche auf. Dabei liegt die Konzentration des Flammschutzmittels bevorzugt im Bereich von 10 bis 18 Gew.-%, insbesondere im Bereich von 11 bis 15 Gew.-% bezogen auf die verstärkte Polyamid-Formmasse. Insbesondere setzt sich das Flammschutzmittel aus einem Gemisch von 8,0 - 17,8 Gew.-% Aluminium-, Zink- und/oder Calciumphosphinat und/oder Diphosphinat, und 0,2 - 10,0 Gew.-% Melaminpolyphosphat zusammen.

Als Antistatika können in den erfindungsgemäßen Formmassen z. B. Ruß und/oder Kohlenstoffnanoröhrchen eingesetzt werden.

Die Verwendung von Russ zusätzlich zu den vorhandenen Kohlenstofffasern kann aber auch der Verbesserung der Schwarzfärbung der Formmasse dienen.

Als Schichtsilikate können in den erfindungsgemäßen Formmassen, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Stabilisatoren bzw. Alterungsschutzmittel können in den erfindungsgemäßen Formmassen, z.B. Antioxidantien, Lichtschutzmittel, UV-Stabilisatoren, UV-Absorber oder UV-Blocker eingesetzt werden.

Wie schon oben dargelegt wurde, werden die flachen Glasfasern (B₁) erfindungsgemäß als Schnittglas (Kurzglasfasern) oder alternativ als Rovings (Endlos- oder Langglasfasern) eingesetzt. Diese Glasfasern weisen Durchmesser der kleinen Querschnittsachse von 3 bis 20 µm und einen Durchmesser der großen Querschnittsachse von 6 bis 40 µm auf, wobei das Verhältnis der senkrecht aufeinander stehenden Querschnittsachsen im Bereich von 2 bis 6, insbesondere 3 bis 6, ganz besonders bevorzugt von 3,5 bis 5,0 liegt. Insbesondere werden erfindungsgemäß E- und/oder S-Glasfasern verwendet. Es können aber auch alle anderen Glasfasersorten, wie z. B. A-, C-, D-, M-, R-Glasfasern oder beliebige Mischungen davon oder Mischungen mit E- und/oder S-Glasfasern eingesetzt werden. Es werden die für Polyamid üblichen Schlichten, wie z. B. diverse Aminosilanschlichten, verwendet, wobei hochtemperaturstabile Schlichten bevorzugt werden.

Die Herstellung der erfindungsgemäßen Polyamidformmassen kann auf üblichen Compoundiermaschinen, wie z. B. ein- oder zweiwelligen Extrudern oder Schneckenknetern erfolgen. In der Regel wird zunächst der polymere Anteil aufgeschmolzen und das Verstärkungsmaterial (Glasfasern und/oder Kohlenstofffasern) kann an der gleichen Stelle oder an verschiedenen Stellen des Extruders, z.B. mittels eines Sidefeeders eingetragen werden. Die Compoundierung erfolgt bevorzugt bei eingestellten Zylindertemperaturen von 280°C bis 360°C. Bei schonender Verarbeitung der erfindungsgemäßen Formmassen resultieren verstärkte Formteile, bei denen die Faserlängenverteilung deutlich zu höheren Faserlängen verschoben ist. So weisen die erfindungsgemäßen Formteile eine im Mittel um 20 bis 200% höhere mittlere Faserlänge im Vergleich zu Formteilen auf Basis von Glasfasern mit rundem Querschnitt auf.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Als mögliche Anwendungen für die aus den erfindungsgemäßen Formmassen hergestellten Formkörper ist vor allem der Bereich des Metalldruckgussersatzes zu nennen, bei dem eine extrem hohe Steifigkeit in Kombination mit einer guten Zähigkeit erwartet wird.

### Anwendungen

### Bereich Elektrogeräte

- Anschlag- und/oder Justierelemente für Elektrohandwerkzeuge mit oder ohne integrierten elektrischen Funktionen (moulded interconnect devices, MID)
- Pleuel und/oder Kolben für Bohrhammer in homogener Ausführung, also aus einem Material oder als Hybridteil, also aus einer Materialkombination
- Gehäuse, Getriebegehäuse für Winkelschleifer, Bohrmaschinen, Elektrohobel oder Schleifmaschinen mit oder ohne integrierten elektrischen Funktionen (MID) in homogener Ausführung oder als Hybridteil, wobei bestimmte Funktionsbereiche (z.B. Kraftübertragungsflächen, Gleitflächen, Dekor-Sichtbereiche, Griffbereich) aus einem anderem kompatiblen oder inkompatiblen (z.B. für gezielte Delamination bzw. Deformation, Sollbruchstelle, Kraft- bzw. Drehmomentbegrenzung) Werkstoff sein können.

- Werkzeugaufnahmen, z.B. Futter und/oder Fixierungen
- Nähmaschinengehäuse, Schiebetische mit oder ohne integrierten elektrischen Funktionen (MID)
- Gehäuse oder Gehäuseteile für die Telekommunikation (z.B. Mobiltelefone), Büroelektronik (Laptop- und Projektoren-Gehäuse), und Unterhaltungselektronik

### Bereich Sanitär- und Hygiene

- Gehäuse und/oder Funktionselemente (z.B. für Pumpen, Getriebe, Ventile) für Mundduschen, Zahnbürsten, Komforttoiletten, Duschzellen, Hygienecenter mit oder ohne integrierten elektrischen Funktionen (MID) in homogener Ausführung oder als Hybridteil
- diverse Konnektoren oder Anschlussmodule
- Pumpengehäuse, Ventilgehäuse oder Wasserzählergehäuse mit oder ohne integrierten elektrischen Funktionen (MID) in homogener Ausführung oder als Hybridteil.

### Bereich Haushaltsgeräte

Gehäuse und/oder Funktionselemente für mechanische, elektrische oder elektro-mechanische Schließsysteme, Verriegelungssysteme oder Sensoren mit oder ohne integrierten elektrischen Funktionen (MID) für
- Kühlschränke, Kühltruhen, Gefriertruhen
- Backöfen, Herde, Dampfgarer
- Geschirrspülmaschinen

### Bereich Automobil

Gehäuse und/oder Halterungen mit oder ohne integrierten elektrischen Funktionen (MID) in homogener Ausführung oder als Hybridteil für
- Bedienungselemente/Schalter (z.B. für Außenspiegelverstellung, Sitzpositionsverstellung, Beleuchtung, Fahrtrichtungsanzeiger)
- Innensensoren, z.B. für Sitzbelegung
- Außensensoren (z.B. für Einparkhilfen, Abstandsmesser mit Ultraschall bzw. mit Radar)
- Sensoren im Motorraum (z.B. Schwingungs- bzw. Klopfsensoren)
- Innen- und Außenbeleuchtung.
- Motoren und/oder Antriebselemente im Innen und Außenbereich (z.B. für Sitzkomfortfunktionen, Außenrückspiegelverstellung, Hauptscheinwerferverstellung und/oder Nachführung, Kurvenlicht)
- Kontroll- und/oder Steuerungssysteme für den Fahrzeugantrieb (z.B. für Medienführung und/oder Regelung von z.B. Treibstoff, Luft, Kühlmittel, Schmiermittel) Mechanische Funktionselemente und/oder Sensorengehäuse mit oder ohne integrierten elektrischen Funktionen (MID) für
- Schließsysteme, Verriegelungen, Zuziehsysteme, z.B. bei Fahrzeugschwenktüren, Schiebetüren, Motorraumklappen bzw. -hauben, Heckklappen, Fahrzeugfenstern
- Konnektoren für Fluidleitungen, Konnektoren im Bereich der Autoelektrik und -elektronik

### Bereich Maschinenbau

- ISO-Normteile und/oder Maschinenelemente (z.B. Schrauben, Muttern, Bolzen, Keile, Wellen, Zahnräder) in Normmassen oder anwendungsspezifischem Design oder homogener Ausführung
- ISO-Normteile und/oder Maschinenelemente, wie z.B. Schrauben, Muttern, Bolzen, Keile, Wellen in Normmassen oder anwendungsspezifischem Design oder als Hybridteil, wobei bestimmte Funktionsbereiche, wie z.B. Kraftübertragungsflächen, Gleitflächen, Dekor-Sichtbereiche aus einem anderem kompatiblen oder inkompatiblen (z.B. für gezielte Delamination, Sollbruchstelle, Kraft/Drehmomentbegrenzung) Werkstoff sein können.
- Ständer, Standfüße, Sockel für Bearbeitungsmaschinen, wie z.B. Standbohrmaschinen, Tischbohrmaschinen, Fräsmaschinen oder Kombimaschinen für Metall- und/oder Holzbearbeitung
- Insertteile, z.B. Gewindebüchsen
- Selbstfurchende Schrauben

### Bereich Energie- und Antriebstechnik:

- Rahmen, Gehäuse, Trägerteile (Substrat) und/oder Befestigungselemente für Solarzellen mit oder ohne integrierten elektrischen Funktionen (MID) in homogener Ausführung oder als Hybridteil.
- Nachführ- und/oder Justierelemente (z.B. für Lager, Scharniere, Gelenke, Zugstangen, Stossstangen) für Kollektoren.
- Pumpengehäuse und/oder Ventilgehäuse mit oder ohne integrierten elektrischen Funktionen (MID) in homogener Ausführung oder als Hybridteil.

### Bereich Medizinalequipment

- Rahmen, Gehäuse, Trägerteile mit oder ohne integrierten elektrischen Funktionen (MID) in homogener Ausführung oder als Hybridteil für Überwachungsgeräte und/oder Equipment zur Unterstützung der Lebensfunktionen.
- Einwegbestecke, wie z.B. Scheren, Klemmen, Zangen, Messergriffe in homogener Ausführung oder als Hybridteil
- Konstruktionen zur kurzzeitigen bzw. notfallmäßigen Fixierung von Frakturen in homogener Ausführung oder als Hybridteil
- Gehhilfen mit oder ohne integrierten elektrischen Funktionen (MID) und/oder Sensoren zur Belastungskontrolle in homogener Ausführung oder als Hybridteil.

Die folgenden Beispiele und Figuren sollen die Erfindung erläutern, ohne sie jedoch einzuschränken.

### Beispiele

In den Beispielen und Vergleichsbeispielen wurden nachfolgend genannte Materialien verwendet:
PA Typ A: Polyamid 6T/61 (70:30) mit einem Mₙ von ca. 11.000 g/mol (ηᵣₑₗ = 1,57), EMS-CHEMIE AG, Schweiz
PA Typ A-VK: Polyamid 6T/61 (70:30) mit einem Mₙ von ca. 1.000 g/mol (ηᵣₑₗ =1,12), EMS-CHEMIE AG, Schweiz
PA Typ B: Polyamid 6T/66 (60:40) mit ηᵣₑₗ= 1,67, EMS-CHEMIE AG, Schweiz
Glasfasern Typ A: NITTOBO CSG3PA-820, 3 mm lang, 28 µm breit, 7 µm dick, Aspektverhältnis der Querschnittsachsen = 4, Aminosilanschlichte, NITTO BOSEKI, Japan (flache Glasfasern, erfindungsgemäß zu verwenden)
Glasfasern Typ B: NITTOBO CSH3PA-870, 3 mm lang, 20 µm breit, 10 µm dick, Aspektverhältnis der Querschnittsachsen = 2, Aminosilanschlichte, NITTO BOSEKI, Japan (flache Glasfasern, kokonförmig, erfindungsgemäß zu verwenden)
Glasfasern Typ C: CS 7928, 4,5 mm lang, 10 µm Durchmesser, BAYER AG, Deutschland (Glasfasern mit kreisförmigem Querschnitt, Stand der Technik)
Melapur^{®}200/70: ein Melaminpolyphosphat (Ciba Spez. GmbH), Flammschutzmittel, CAS-Nr: 218768-84-4
Exolit^{®}GP1230: ein phosphororganisches Salz (Clariant Produkte GmbH), Flammschutzmittel.

Die Formmassen der Zusammensetzungen in Tabelle 1 bis 3 werden auf einen Zweiwellenextruder der Fa. Werner u. Pfleiderer Typ ZSK 30 hergestellt. Die Granulate P A6T/6I, PA6T/66 sowie die Zusatzstoffe werden in die Einzugszone dosiert. Die Glasfaser wird über einen Sidefeeder 3 Gehäuseeinheiten vor der Düse in die Polymerschmelze dosiert. Die Gehäusetemperatur wurde als aufsteigendes Profil bis 350°C eingestellt. Bei 150 bis 200 upm wurden 10 kg Durchsatz erreicht. Die Granulierung erfolgte mittels einer Unterwassergranulierung bzw. Heißabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 110°C für 24h wurden die Granulateigenschaften gemessen und die Prüfkörper hergestellt.

Die Prüfkörper wurden auf einer Arburg Spritzgießanlage hergestellt, wobei die Zylindertemperaturen von 300°C bis 350°C und eine Scheckenumfangsgeschwindigkeit von 15 m/min eingestellt wurden. Die Formtemperatur wurde mit 100 - 140°C gewählt.

Die Messungen wurden nach folgenden Normen und an folgenden Prüfkörpern durchgeführt.

Zug-E-Modul:
ISO 527 mit einer Zuggeschwindigkeit von 1 mm/min
ISO-Zugstab , Norm: ISO/CD 3167, Typ A1, 170 x 20/10 x 4 mm, Temperatur 23 °C

Reißfestigkeit und Reißdehnung:
ISO 527 mit einer Zuggeschwindigkeit von 5 mm/min
ISO-Zugstab , Norm: ISO/CD 3167, Typ A1, 170 x 20/10 x 4 mm, Temperatur 23 °C

Schlagzähigkeit nach Charpy:
ISO 179/*eU
ISO-Prüfstab, Norm: ISO/CD 3167, Typ B1, 80 x 10 x 4 mm, Temperatur 23 °C
* 1 = nicht instrumentiert, 2 = instrumentiert

Kerbschlagzähigkeit nach Charpy:
ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

Glasumwandlungstemperatur (Tg), Schmelzenthalpie (ΔH)
ISO-Norm 11357-1/-2
Granulat

Die Differential Scanning Calorimetry (DSC) wurde mit Aufheizrate von 20 °C/min durchgeführt.

Relative Viskosität:
DIN EN ISO 307, in 0,5 Gew.-%-iger m-Kresollösung, Temperatur 20 °C

MVR: (Melt volume rate)
nach ISO 1133 bei 330 bzw. 340°C und einer Belastung von 21,6 kg

Fließlänge:
Die Fließlängen wurden mittels einer Arburg-Spritzgussmaschine (Typ: ARBURG - ALLROUNDER 320-210-750) bestimmt. Es wurden Fließspiralen der Dimension 1,5mm x 10 mm bei einer Massetemperatur von 330 - 340°C und einer Formtemperatur von 120 - 130°C angefertigt.

Schwund:
Die Schwindung bei der Spritzgussverarbeitung wurde nach ISO 294-4 anhand einer Platte der Dimension 60x60x2 mm (Schwundplatte) bestimmt. Die Schwundplatten wurden mittels einer Spritzgießmaschine Ferromatik Milacron K85D-S/2F bei Zylindertemperaturen von 320 bis 340°C, einem Nachdruck von 600 bar und einer Formtemperatur von 160°C hergestellt.

Berstdruck:
Ein zylindrischer, einseitig verschlossener Spritzgusskörper (Innendurchmesser 27,2 mm; Wandstärke: 4 mm) wird mit Wasser gefüllt, mittels einer Hydraulikschnellkupplung in einem Berstdruckprüfstand montiert und mit 10 bar/s Druckanstieg einem Berstdruckversuch (Kurzzeit-Innendruckbelastung bis zum Versagen) unterzogen. In den Tabellen wird der maximal erreichte Druck angegeben.

Wenn in der Tabelle nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

**Tabelle 1: Beispiele 1 bis 5 und Vergleichsbeispiel 1**

| **Beispiel** | | **1** | **2** | **3** | **4** | **5** | **VB1** |
|---|---|---|---|---|---|---|---|
| ***Zusammensetzung*** | | | | | | | |
| PA Typ A | Gew.-% | 50 | 40 | 35 | 30 | 40 | 40 |
| PA Typ B | | 0 | 0 | 0 | 0 | 0 | 0 |
| Glasfasern Typ A | Gew.-% | 50 | 60 | 65 | 70 | 0 | 0 |
| Glasfasern Typ B | Gew.-% | 0 | 0 | 0 | 0 | 60 | 0 |
| Glasfasern Typ C | Gew.-% | 0 | 0 | 0 | 0 | 0 | 60 |

| ***Eigenschaften*** | | | | | | | |
|---|---|---|---|---|---|---|---|
| MVR (340°C/21,6kg) | cm³/10min | 215 | 205 | 165 | 135 | 170 | 160 |
| Glasfasergehalt | Gew.-% | 50,3 | 60,2 | 65,2 | 69,8 | 60,1 | 60,3 |
| HDT A (1,8 MPa) | °C | 280 | 280 | 280 | 280 | 280 | 280 |
| HDT C (8 MPa) | °C | 222 | 253 | 260 | 267 | 222 | 212 |
| Zug-E-Modul | MPa | 17800 | 22100 | 25000 | 28000 | 21900 | 21800 |
| Zug-E-Modul längs¹) | MPa | 19600 | 23900 | 27300 | 29700 | 23900 | 24000 |
| Zug-E-Modul quer¹) | MPa | 13000 | 16200 | 16900 | 17900 | 13400 | 11700 |
| Verhältnis Zug-E- Modul quer/längs | | 0,60 | 0,68 | 0,62 | 0,60 | 0,56 | 0,49 |
| Reissfestigkeit | MPa | 242 | 268 | 273 | 289 | 245 | 230 |
| Reissfestigkeit längs¹) | MPa | 211 | 241 | 251 | 247 | 230 | 224 |
| Reissfestigkeit quer¹) | MPa | 95 | 99 | 107 | 106 | 80 | 66 |
| Verhältnis Reissfestigkeit quer/längs | | 0,45 | 0,41 | 0,43 | 0,43 | 0,34 | 0,29 |
| Reissdehnung | % | 1,6 | 1,4 | 1,3 | 1,0 | 1,3 | 1,2 |
| Schlagzähigkeit Charpy, 23°C | kJ/m² | 75 | 71 | 74 | 73 | 65 | 63 |
| Kerbschlagzähigkeit Charpy, 23°C | kJ/m² | 20 | 22 | 24 | 25 | 16 | 12 |
| Schwund quer | % | 0,19 | 0,16 | 0,15 | 0,20 | 0,28 | 0,39 |
| Schwund längs | % | 0,5 | 0,45 | 0,42 | 042 | 0,60 | 0,81 |
| Fliesslänge (340°C/130°C) | mm | 160 | 150 | 145 | 135 | 145 | 140 |
| Berstdruck | bar | n.b. | 300 | n.b. | n.b. | n.b. | 250 |

| | | | | | | | |
|---|---|---|---|---|---|---|---|
| 1) Zugversuch durchgeführt an Biax-Probekörper | | | | | | | |

Gegenüber der Formmasse mit runden Glasfasern (VB1) zeigt die erfindungsgemäße Formmasse (B₂) auf Basis von PA6T/61 eine um 39% erhöhte Quersteifigkeit und eine um 50% erhöhte Querfestigkeit. Gegenüber der Formmasse mit runden Glasfasern (VB2) zeigt die erfindungsgemäße Formmasse (B7) auf Basis von PA6T/66 eine um 34% erhöhte Quersteifigkeit und eine um 51 % erhöhte Querfestigkeit. Die erfindungsgemäßen Formmassen auf Basis von PA6T/61 (B₂) und PA6T/66 (B7) übertreffen die Quersteifigkeit bzw. Querfestigkeit der mit den kokonförmigen Glasfasern hergestellte Formmassen der Versuche 5 und 10 um 25 bis 35%. Die Wärmeformbeständigkeit (HDT C) der mit 60 Gew.- % der flachen Glasfasern mit einem Aspektverhältnis von 4,0 verstärkten Formmassen (Beispiel 2) liegt 30°C über derjenigen der konventionellen Formmasse (VB1). Damit erreichen Formmassen, verstärkt mit runden Glasfasern, nicht das Leistungsvermögen der erfindungsgemäßen Formmassen.

**Tabelle 2: Beispiele 6 bis 10 und Vergleichsbeispiel 2**

| **Beispiel** | | **6** | **7** | **8** | **9** | **10** | **VB2** |
|---|---|---|---|---|---|---|---|
| ***Zusammensetzung*** | | | | | | | |
| PA Typ A | Gew.-% | 0 | 0 | 0 | 0 | 0 | 0 |
| PA Typ B | | 50 | 40 | 35 | 30 | 40 | 40 |
| Glasfasern Typ A | Gew.-% | 50 | 60 | 65 | 70 | 0 | 0 |
| Glasfasern Typ B | Gew.-% | 0 | 0 | 0 | 0 | 60 | 0 |
| Glasfasern Typ C | Gew.-% | 0 | 0 | 0 | 0 | 0 | 60 |

| ***Eigenschaften*** | | | | | | | |
|---|---|---|---|---|---|---|---|
| MVR (330°C/21,6kg) | cm³/10min | 105 | 90 | 70 | 45 | 80 | 75 |
| Glasfasergehalt | Gew.-% | 50,0 | 59,7 | 65,1 | 69,5 | 60.3 | 60,1 |
| Zug-E-Modul | MPa | 18400 | 23300 | 25600 | 28000 | 22800 | 22600 |
| Zug-E-Modul längs¹) | MPa | 17700 | 22400 | 23800 | 27200 | 21900 | 21600 |
| Zug-E-Modul quer¹) | MPa | 10600 | 13700 | 14900 | 15100 | 11500 | 10200 |
| Verhältnis Zug-E- Modul quer/längs | | 0,60 | 0,61 | 0,63 | 0,56 | 0,53 | 0,47 |
| Reissfestigkeit | MPa | 249 | 260 | 262 | 255 | 255 | 251 |
| Reissfestigkeit längs¹) | MPa | 200 | 215 | 207 | 210 | 195 | 181 |
| Reissfestigkeit quer¹) | MPa | 97 | 100 | 96 | 89 | 80 | 66 |
| Verhältnis Reissfestigkeit quer/längs | | 0,49 | 0,47 | 0,46 | 0,42 | 0,41 | 0,33 |
| Reissdehnung | % | 1,9 | 1,6 | 1,4 | 1,2 | 1,5 | 1,8 |
| Schlagzähigkeit Charpy, 23°C | kJ/m² | 75 | 76 | 79 | 70 | 70 | 66 |
| Kerbschlagzähigkeit Charpy, 23°C | kJ/m² | 20 | 23 | 24 | 25 | 15 | 11 |
| Schwund quer | % | 0,20 | 0,20 | 0,21 | 0,38 | 0,40 | 0,50 |
| Schwund längs | % | 0,63 | 0,59 | 0,55 | 0,51 | 0,65 | 0,89 |
| Fliesslänge (330°C/120°C) | mm | 158 | 134 | 123 | 105 | 120 | 110 |
| Berstdruck | bar | n.b. | 430 | n.b. | n.b. | n.b. | 380 |

| | | | | | | | |
|---|---|---|---|---|---|---|---|
| ¹) Zugversuch durchgeführt an Biax-Probekörper | | | | | | | |

Für den Zugversuch wurden spezielle Probekörper (BIAX, publiziert in Noss'Ovra Personalzeitschrift, Dezember 2006, Nr. 12, 29. Jahrgang, EMS-CHEMIE AG) verwendet, die die richtungsabhängige Messung der Steifigkeit und Festigkeit erlauben.

Aus dem Vergleich der mit 60 Gew.% verstärkten Formmassen ergibt sich, dass durch Kombination von flachen Glasfasern mit der erfindungsgemäßen niederviskosen Polyamidformmasse die Quersteifigkeit um über 30% und die Querfestigkeit um 50% verbessert werden konnte.

Nach Veraschen der Probekörper wurde die Längenverteilung der Glasfasern sowie die mittlere Faserlänge bestimmt. Die erfindungsgemäßen Formkörper enthielten Glasfasern mit einer deutlich erhöhten Faserlänge.

Bei der Herstellung der Probekörper durch Spritzgiessen fällt ein weiterer Vorteil der erfindungsgemäßen Formmassen auf, der gegenüber üblichen mit runden Glasfaser verstärkten Formmassen deutlich reduzierte Fülldruck. Die Kombination von tiefviskosen Polyamiden und flachen Glasfasern ermöglicht die Herstellung von Spritzgussteilen mit einem um 20 - 30% niedrigeren Fülldruck.

**Tabelle 3: Beispiel 11 und Versteichsbeispiel 3**

| **Beispiel** | | **11** | **VB3** |
|---|---|---|---|
| ***Zusammensetzung*** | | | |
| PA Typ A-VK | Gew.-% | 4,0 | 4,0 |
| PA Typ B | Gew.-% | 31,1 | 31,1 |
| Exolit^{®}OP 1230 | Gew.-% | 12,0 | 12,0 |
| Melapur^{®}200/70 | Gew.-% | 0,5 | 0,5 |
| Alugel 34-TH (Aluminiumtristearat) | Gew.-% | 0,5 | 0,5 |
| Stabilisierung/Pigment | Gew.% | 1,9 | 1,9 |
| Glasfasern Typ A | Gew.-% | 50 | 0 |
| Glasfasern Typ C | Gew.% | 0 | 50 |

| ***Eigenschaften*** | | | |
|---|---|---|---|
| MVR (330°C/21,6kg) | cm³/10min | 1 - 75 | 55 |
| Glasfasergehalt | Gew.-% | 50,0 | 50,1 |
| Zug-E-Modul | MPa | 17900 | 17000 |
| Reissfestigkeit | MPa | 143 | 138 |
| Reissdehnung | % | 1.2 | 1.1 |
| Fliesslänge (330°C/120°C) | mm | 460 | 315 |
| Brandklassifizierung UL-94 (Dicke der Probenkörper: 0,8 mm) | | VO | VO |

| | | | |
|---|---|---|---|
| ¹⁾ Zugversuch durchgeführt an Biax-Probekörper | | | |

Wie der Vergleich von Beispiel 11 und Vergleichsbeispiel VB3 zeigt, lässt sich die mit flachen Glasfasern verstärkte, flammgeschützte Formmasse deutlich besser verarbeiten als die mit runden Glasfasern verstärkte Formmasse mit ansonsten gleicher Zusammensetzung: Im Fall des erfindungsgemässen Beispiels 11 resultiert eine um 46% höhere Fliesslänge.

## Patentansprüche

1. Verstärkte Polyamidformmassen mit hoher Kerbschlagzähigkeit, enthaltend teilaromatische Polyamide und flache Glasfasern als ein verstärkendes Medium, **gekennzeichnet durch**
- eine Polyamidmatrix (A), aus einem hochschmelzenden Polyamiden mit einem DSC-Schmelzpunkt (ISO 11357) von wenigstens 270°C, einem HDT A von wenigstens 260°C bei einem Verstärkungsgrad von wenigsten 50 Gew.-%, und einer Lösungsviskosität, gemessen in m-Kresol (0,5 Gew.-%, 20°C) von ηᵣₑₗ kleiner 1,9, insbesondere von ηᵣₑₗ kleiner 1,8, wobei das hochschmelzende Polyamid insbesondere auf Basis von aromatischen Dicarbonsäuren und aliphatischen Diaminen ausgebildet ist, wobei ein Teil der aromatischen Dicarbonsäuren **durch** aliphatische und/oder cycloaliphatische Dicarbonsäuren ersetzt sein kann, ein Teil der aliphatischen Diamine **durch** cycloaliphatische und/oder aralphatische Diamine ersetzt sein kann, und ein Teil der Dicarbonsäuren und der Diamine **durch** Lactame und/oder Aminocarbonsäuren ersetzt sein kann/ und
- einen Füllstoff (B) enthaltend flache Glasfasern mit einem Querschnitt, dessen Hauptachse und Nebenachse unterschiedliche Werte aufweisen,
sowie (C) Zusatz- und Hilfsstoffe,
- wobei die Gewichtsprozente der Komponenten (A) bis (C) zusammen 100% ergeben.

2. Verstärkte Polyamidformmassen nach Anspruch 1, mit hoher Kerbschlagzähigkeit, enthaltend teilaromatische Polyamide und flache Glasfasern als ein verstärkendes Medium, **gekennzeichnet durch**
- eine Polyamidmatrix, enthaltend folgende Komponenten:
(A) 20 bis 60 Gew.-% mindestens eines hochschmelzenden Polyamids mit einem DSC-Schmelzpunkt (ISO 11357) von wenigstens 270°C, aufgebaut aus (A₁) Dicarbonsäuren, enthaltend
50 - 100 Mol-% Terephthalsäure, bezogen auf den Gesamtgehalt an anwesenden Dicarbonsäuren,
0 - 50 Mol-% einer anderen aromatischen Dicarbonsäure mit 8 bis 20 Kohlenstoffatomen bezogen auf den Gesamtgehalt der Säuren,
0 - 50 Mol-% einer aliphatischen Dicarbonsäure mit 6 bis 36 Kohlenstoffatomen,
0 - 50 Mol-% einer cycloaliphatischen Dicarbonsäure mit 8 bis 20 Kohlenstoffatomen,
(A₂) Diaminen, enthaltend
50 - 100 Mol-% mindestens eines Diamins ausgewählt aus der Gruppe 1,6-Hexandiamin, 2-Methyl-1,5-pentandiamin, 1,7-Heptandiamin, 1,8-Octandiamin, 1,11-Undecandiamin, 1,12-Dodecandiamin, MACM, PACM, 1,3-Bis-(Aminomethyl)-cyclohexan und MXDA, bezogen auf den Gesamtgehalt an anwesenden Diaminen,
0 - 50 Mol-% anderer aliphatische Diamine mit 6 bis 18 Kohlenstoffatomen,
0 - 50 Mol-% cycloaliphatische Diamine mit 6 bis 20 Kohlenstoffatomen,
0 - 50 Mol-% araliphatische Diamine MXDA, PXDA, und gegebenenfalls (A₃) Aminocarbonsäuren und/oder Lactamen, enthaltend
0 - 100 Mol-% Lactame mit 6 bis 12 Kohlenstoffatomen,
0 - 100 Mol-% Aminocarbonsäuren mit 6 bis 12 Kohlenstoffatomen,
wobei die Komponenten (A₁) und (A₂) weitgehend äquimolar eingesetzt werden und die Konzentration von (A₃) 35 Gew.-% der Summe von (A₁) bis (A₃) nicht überschreitet, und
(B) 40 bis 80 Gew.-% mindestens eines Füllstoffes, enthaltend:
(B₁) 40 bis 80 Gew.-% flache Glasfasern mit länglicher Gestalt, wobei die Glasfasern eine nicht kreisförmige Querschnittsfläche und ein Abmessungsverhältnis von der Haupt-Querschnittsachse zur Neben-Querschnittsachse von 2 bis 6 aufweisen, insbesondere im Bereich von 3 bis 6, besonders bevorzugt im Bereich von 3.5 und 5.0, oder eines Gemisches der Glasfasern mit Kohlenstoffasern,
(B₂) 0 - 30 Gew.-% teilchen- oder schichtförmige Füllstoffe,
(B₃) 0 - 30 Gew.-% Kohlenstoff- und/oder Basalt- und/oder Aramidfasern (p- oder m- Aramidfasern),
(B₄) 0 - 30 Gew.-% Glasfasern mit rundem Querschnitt, und
(C) 0 bis 20 Gew.-% Zusatz- und Hilfsstoffe,
- wobei die Gewichtsprozente der Komponenten (A) bis (C) zusammen 100% ergeben.

3. Polyamidformmassen gemäß Anspruch 1 oder 2, **dadurch gekennzeichnet, dass** keine Glasfasern mit einer länglichen oder ovalen Gestalt oder gebogenen Gestalt mit mindestens einem eingeschnürten Abschnitt in den Polyamidformmassen enthalten sind.

4. Polyamidformmassen gemäß einem der Ansprüche 1-3, **dadurch gekennzeichnet, dass** als flache Glasfasern Glasfasern mit rechtwinkligem oder nahezu rechtwinkligem Querschnitt verwendet werden.

5. Polyamidformmassen gemäß der Ansprüche 1 bis 4, **dadurch gekennzeichnet, dass** die flachen Glasfasern in Form von Kurzglas (Schnittglas) mit einer Länge von 2 bis 50 mm vorliegen, und/oder dass die flachen Glasfasern in Form von Langglas (Rovings) vorliegen, und/oder dass die flachen Glasfasern in Konzentrationen von zwischen 48 und 75 Gew.-% in den Formmassen enthalten sind, und/oder dass die als Kurz- oder Langglas eingesetzten flachen Glasfasern einen Durchmesser der Haupt-Querschnittsachse von 6 bis 40 µm aufweisen und einen Durchmesser der Neben-Querschnittsachse von 3 bis 20 µm aufweisen, wobei das Verhältnis der senkrecht aufeinander stehenden Querschnittsachse im Bereich von 3 bis 6, bevorzugt zwischen 3,5 und 5,0 liegt, und/oder dass die flachen Glasfasern ausgewählt sind aus der Gruppe aus E-Glasfasern, A-Glasfasern, C-Glasfasern, D-Glasfasern, M-Glasfasern, S-Glasfasern oder R-Glasfasern oder Mischungen davon, wobei E- und S-Glasfasern bevorzugt sind, und wobei besonders bevorzugt die Fasern mit einer Amino- oder Epoxysilanbeschichtung versehen sind.

6. Polyamidformmassen gemäß einem der vorhergehenden Ansprüche 1 bis 5, **dadurch gekennzeichnet, dass** die Glasfasern im Gemisch mit Kohlenstofffasern vorliegen und zwar in einem Mischungsverhältnis von einem Gewichtsverhältnis von Glasfasern/Kohlenstofffasern von 70/30 bis 97/3.

7. Polyamidformmassen gemäß einem der vorhergehenden Anspruch 1 bis 6, **dadurch gekennzeichnet, dass** das mindestens eine hochschmelzende teilaromatische Polyamid ausgewählt ist aus der Gruppe, bestehend aus PA 6T/6I, PA 6T/66, PA 6T/610, PA 6T/612, PA 6T/12, PA 6T/11, PA 6T/6, PA 6T/10T, PA 6T/10I, PA 6T/106, PA 6T/1010, PA 6T/66/106, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPT/MPI, PA MPT/MP6, PA 6T/MPI, PA 6T/9T, PA 6T/12T, PA 6T/6I/66, PA 6T/6I/6, PA 6T/6I/12, PA 6T/66/6, PA 6T/66/12, PA 6T/6I/MACMI, PA 6T/66/PACM6, oder deren Gemische, Blends oder Legierungen,
oder hergestellt aus mindestens 50 Mol-% Terephthalsäure und Hexamethylendiamin, und/oder dass das teilaromatische Polyamid ein teilkristallines Polyamid 6T/6I ist, das 50 bis 80 Mol-% Hexamethylenterephthalamid-Einheiten und 20 bis 50 Mol-% Hexamethylenisophthalamid-Einheiten enthält,
oder 6T/66 ist, das 50 bis 80 Mol-% Hexamethylenterephthalamid-Einheiten und 20 bis 50 Mol-% Hexamethylenadipamid (66)-Einheiten enthält,
oder ein teilkristallines ²ternäres Polyamid 6T/6I/66 ist, das 50 bis 70 Mol-% Hexamethylenterephthalamid-, 5 bis 45 Mol-% Hexamethylenisophthalamid-Einheiten und 5 bis 45 Mol-% Hexamethylenadipamid (66)-Einheiten enthält,
oder ein teilkristallines PA 6T/6I/X ist, das mindestens 50 Mol-% Hexamethylenterephthalamid-, und 0 bis 40 Mol-% Hexamethylenisophthalamid- und 10 bis 50 Mol-% aliphatische Einheiten der Formel NH-(CH₂)ₙ₋₁-CO-, worin n gleich 6, 11 oder 12 ist, enthält,
oder ein teilkristallines Polyamid 6T/6I oder ein Polyamid 6T/66 ist, das mindestens 52 Mol-% Hexamethylenterephthalamid-Einheiten enthält,
oder bis zu 26 Mol-% aliphatischer Einheiten enthält, die durch Kondensation von dimerisierten Fettsäuren mit bis zu 44 Kohlenstoffatomen und Hexamethylendiamin herstellbar sind.

8. Polyamidformmassen gemäß einem der vorhergehenden Ansprüche 1 bis 7, **dadurch gekennzeichnet, dass** die Formmassen Kerbschlagzähigkeiten von mindestens 23 kJ/m² (gemessen nach Charpy bei 23°C gemäß ISO 179/2-1 eA) bei einem Glasfaseranteil ≥ 60 Gew.-% oder eine Kerbschlagzähigkeit von über 20 kj/m² (gemessen nach Charpy bei 23°C gemäß ISO 179/2-1 eA) bei einem Glasfaseranteil von 50 bis 60 Gew.-% aufweisen.

9. Polyamidformmassen gemäß einem der vorhergehenden Ansprüche 1 bis 8, **gekennzeichnet durch** eine hohe Fliesslänge, insbesondere bei aus den Formmassen hergestellten, dünnwandigen Spritzgussteilen von > 120 mm bei Verstärkungsgraden mit Komponente (B) im Bereich von 40 Gew.-% bis 65 Gew.-%.

10. Polyamidformmassen gemäß einem der vorhergehenden Ansprüche 1 bis 9, **dadurch gekennzeichnet, dass** als weitere übliche Zusatz- und Hilfsstoffe (C) in den Formmassen solche aus der Gruppe der anorganischen Stabilisatoren, organischen Stabilisatoren, Gleitmittel, Farbstoffe, metallischen Pigmente, Metallflitter, metallbeschichteten Partikel, halogenhaltigen Flammschutzmitteln, halogenfreien Flammschutzmitteln, Schlagzähmodifikatoren, weitere Polymere, wie z.B. Polyphenylenoxid, Polyphenylensulfid, Antistatika, Leitfähigkeitsadditive, insbesondere Ruß und/oder Kohlenstoffnanoröhrchen, Entformungsmittel, optischen Aufhellern, natürlichen Schichtsilikaten, synthetischen Schichtsilikaten oder Gemischen der vorgenannten Zusatzstoffe enthalten sind, wobei als Flammschutzmittel vorzugsweise 5 bis 20 Gew.-% einer Phosphinatverbindung, insbesondere 8 bis 17,8 Gew.-% einer Phosphinatverbindung und 0,2 bis 10 Gew.-%, eines Polyphosphatsalzes einer 1,3,5-Triazinverbindung in den vestärkten Polyamidformmassen enthalten sind.

11. Verfahren zur Herstellung der Polyamidformmassen gemäß irgendeinem der vorhergehenden Ansprüche 1 bis 10, auf üblichen Compoundieranlagen bei eingestellten Zylindertemperaturen von 280°C bis 350°C, wobei man zunächst den polymeren Anteil aufschmilzt und dann die geschnittenen flachen Glasfasern und/oder die anderen Füllstoffe einträgt.

12. Verwendung der Formmassen gemäß einem der Ansprüche 1 bis 10 mit Kerbschlagzähigkeiten von über 20 kJ/m² (gemessen nach Charpy bei 23°C, gemäß ISO 179/2-1 eA) zur Herstellung von Formkörpern, insbesondere von Spritzgussteilen.

13. Verfahren zur Herstellung von Formkörpern aus den Polyamidformmassen gemäß einem der Ansprüche 1 bis 10 durch Spritzguss, Extrusion, Pultrusion, Spritzblasen oder anderen Verformungstechniken, wobei Spritzguss besonders bevorzugt ist.

14. Formkörper, insbesondere Spritzgussteil, erhältlich aus den Polyamidformmassen gemäß einem oder mehreren der Ansprüche 1 bis 10.

15. Formkörper gemäß Anspruch 14, **dadurch gekennzeichnet, dass** es ein Mobiltelefongehäuse oder ein Mobiltelefongehäuseteil ist.

## Claims

1. A reinforced polyamide molding compound having a high notched impact strength, comprising partially aromatic polyamide and flat glass fibers as a reinforcing medium, **characterized by**
- a polyamide matrix (A), made of a high-melting polyamide with a DSC-melting point (ISO 11357) of at least 270°C, a HDT A of at least 260°C at a reinforcement degree of at least 50 wt % and a solution viscosity, measured in m-cresol (0.5 wt %, 20°C) of ηᵣₑₗ smaller 1.9, in particular of ηᵣₑₗ smaller 1.8, wherein the high-melting polyamide is formed in particular on the basis of aromatic dicarboxylic acids and aliphatic diamines, wherein a part of the aromatic dicarboxylic acids can be replaced by aliphatic and/or cycloaliphatic dicarboxylic acids, a part of the aliphatic diamines can be replaced by cycloaliphatic and/or aralphatic diamines, and a part of the dicarboxylic acids and the diamines may be replaced by lactames and/or aminocarboxylic acids, and
- a filler (B) comprising flat glass fibers with a cross-section the main axis and secondary axis of which are different,
as well as (C) additives and auxiliary substances,
- wherein the amount of components (A) through (C) in wt % yields 100% together.

2. Reinforced polyamide molding compounds according to claim 1, with a high notched impact strength comprising partially aromatic polyamide and flat glass fibers as a reinforcing medium, **characterized by**
- a polyamide matrix, containing the following components:
(A) 20 to 60 wt % of at least one high-melting polyamide with a DSC melting point (ISO 11357) of at least 270°C, composed of (A₁) dicarboxylic acids, containing
50-100 mol % terephthalic acid, based on the total amount of dicarboxylic acids present,
0-50 mol % of another aromatic dicarboxylic acid with 8 to 20 carbon atoms, based on the total amount of acids,
0-50 mol % of an aliphatic dicarboxylic acid with 6 to 36 carbon atoms,
0-50 mol % of a cycloaliphatic dicarboxylic acid with 8 to 20 carbon atoms,
(A₂) diamines, containing
50-100 mol % of at least one diamine selected from the group consisting of 1,6-hexanediamine, 2-methyl-1,5-pentanediamine, 1,7-heptanediamine, 1,8-octanediamine, 1,11-undecanediamine, 1,12-dodecanediamine, MACM, PACM, 1,3-bis-(aminomethyl)-cyclohexane and MXDA, based on the total amount of diamines present,
0-50 mol % other aliphatic diamines with 6 to 18 carbon atoms,
0-50 mol % cycloaliphatic diamines with 6 to 20 carbon atoms,
0-50 mol % araliphatic diamines MXDA, PXDA, and optionally (A₃) aminocarboxylic acids and/or lactams, containing 0-100 mol % lactams with 6 to 12 carbon atoms,
0-100 mol % aminocarboxylic acids with 6 to 12 carbon atoms, wherein the components (A₁) and (A₂) are used approximately in equimolar amounts and the concentration of (A₃) does not exceed 35 wt % of the total of (A₁) through (A₃), and
(B) 40 to 80 wt-% at least of a filler, compring:
(B1) 40 to 80 wt %, flat glass fibers with an elongated shape, where the glass fibers have a noncircular cross-sectional area and a dimension ratio of the main cross-sectional axis to the secondary cross-sectional axis of 2 to 6, optionally 3 to 6, or optionally from 3.5 to 5.0, or a mixture of glass fibres and carbon fibres
(B2) 0-30 wt % particulate or stratified fillers,
(B3) 0-30 wt % carbonfibers and/or basalt fibers and/or p- or m-aramid fibers,
(B4) 0-30 wt % glass fibers with a round cross section, and
(C) 0 to 20 wt % additives and auxiliary substances,
- wherein the amount of components (A) through (C) in wt % yields 100% together.

3. The polyamide molding compound according to claim 1 or 2, **characterized in that** no glass fibers with an elongated or oval shape or curved shape with at least one constricted section are present.

4. The polyamide molding compound according to claim 1 to 3, **characterized in that** glass fibers with a rectangular or almost rectangular cross section are used as the flat glass fibers.

5. The polyamide molding compound according to one of claims 1 - 4, **characterized in that** the flat glass fibers are in the form of short glass (chopped glass) with a length of 2 to 50 mm, and/or that the flat glass fibers are in the form of long glass (rovings), and/or that the flat glass fibers are present in the molding compounds in concentrations between 48 and 75 wt % based on the total weight of the molding compound, and/or that the flat glass fibers utilized as short- or long glass have a diameter of the main cross-sectional axis of 6 to 40 µm and have a diameter of the secondary cross-sectional axis of 3 to 20 µm, whereby the ratio of the cross-sectional axes perpendicular to each other is in the range of 3 to 6, preferably between 3.5 and 5.0, and/or thatthe flat glass fibers are selected from the group consisting of E-glass fibers, A-glass fibers, C-glass fibers, D-glass fibers, M-glass fibers, S-glass fibers or R-glass fibers or mixtures thereof, optionally only E- and S-glass fibers, and whereby the fibers are optionally provided with an amino or epoxysilane coating.

6. The polyamide molding compound according to one of claims 1- 5, wherein the flat glass fibers are present in mixture with carbon fibers, in a mixing ratio of a weight ratio of glass fibers/carbon fibers of 70/30 to 97/3.

7. The polyamide molding compound according to one of claims 1-6, wherein the at least one high-melting partially aromatic polyamide is selected from the group consisting of PA 6T/6I, PA 6T/66, PA 6T/610, PA 6T/612, PA 6T/12, PA 6T/11, PA 6T/6, PA 6T/10T, PA 6T/10I, PA 6T/106, PA 6T/1010, PA 6T/66/106, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPT/MPI, PA MPT/MP6, PA 6T/MPI, PA 6T/9T, PA 6T/12T, PA 6T/6I/66, PA 6T/6I/6, PA 6T/6I/12, PA 6T/66/6, PA 6T/66/12, PA 6T/6I/MACMI, PA 6T/66/PACM6, and mixtures, blends or alloys thereof,
or synthesized from at least 50 mol % terephthalic acid and hexamethylene-diamine, and/or that the partially aromatic polyamide is a partially crystalline polyamide 6T/6I, which contains 50 to 80 mol % hexamethyleneterephthalamide units and 20 to 50 mol % hexamethyleneisophthalamide units,
or 6T/66 is, which contains 50 to 80 mol % hexamethyleneterephthalamide units and 20 mol % to 50 mol % hexamethyleneadipamide (66) units,
or a partially crystalline ternary polyamide 6T/6I/66 containing 50 mol % to 70 mol % hexamethyleneterephthalamide units, 5 mol % to 45 mol % hexamethyleneisophthalamide units and 5 mol % to 45 mol % hexamethyleneadipamide (66) units,
or a partially crystalline PA 6T/6I/X, which contains at least 50 mol % hexamethyleneterephthalamide and 0 to 40 mol % hexamethyleneisophthalamide and 10 mol % to 50 mol % aliphatic units of the formula NH-(CH₂)ₙ₋₁-CO, where n is 6, 11 or 12,
or a partially crystalline polyamide 6T/6I or a polyamide 6T/66 containing at least 52 mol % hexamethylene-terephthalamide units,
or up to 26 mol % aliphatic units that can be synthesized by condensation of dimerized fattyacids with up to 44 carbon atoms and hexamethylenediamine.

8. The polyamide molding compound according to one of claims 1 -7, **characterized in that** the molding compound has notched impact strength of at least 23 kJ/m² (measured according to Charpy at 23 °C according to ISO 179/2-1 eA) with a glass fiber content of ≥ 60 wt %, or a notched impact strength of more than 20 kj/m² (measured according to Charpy at 23 °C according to ISO 179/2-1 eA) at a glass fiber content of 50 to 60 wt %.

9. The polyamide molding compound according to one of claims 1-8, **characterized by** a high flow length > 120 mm, with degrees of reinforcement with component (B) in the range of 40 wt % to 65 wt %.

10. The polyamide molding compound according to one of claims 1-9, further comprising as additional conventional additives and auxiliary substances (C) in the molding compound, at least one selected from the group consisting of inorganic stabilizers, organic stabilizers, lubricants, dyes, metallic pigments, metal flakes, metal-coated particles, halogenated flame retardants, halogen-free flame retardants, impact strength modifiers, additional polymers, which can be polyphenylene oxide or polyphenylene sulfide, antistatics, conductivity additives, which can be carbon black and/or carbon nanotubes, mold release aids, optical brighteners, natural phyllosilicates, synthetic phyllosilicates or mixtures of the aforementioned additives, wherein as a flame retardant, preferably 5 wt % to 20 wt % of a phosphinate compound, particularly 8 wt % to 17.8 wt % of a phosphinate compound, and 0.2 wt % to 10 wt % of a poly-phosphate salt of a 1,3,5-triazine compound are contained in the reinforced polyamide molding compounds.

11. A method for manufacturing the polyamide molding compound according to one of claims 1-10, on conventional compounding equipment at set barrel temperatures of 280 °C to 350 °C, whereby the polymer component is first melted and then the chopped flat glass fibers or the mixture of glass fibres and carbon fibres and/or the other fillers are added.

12. Use of the polyamide molding compounds according to one of claims 1 to 10 for manufacturing of a polyamide molding, **characterised in that** the molding compound has a notched impact strength of more than 20 kJ/m² (measured according to Charpy at 23 °C, according to ISO 179/2-1 eA), wherein preferably the moulded article is an injection moulded article.

13. A method for manufacturing a moulded article from the polyamide moulding compound according to one of claims 1-10 by injection moulding, extrusion, pultrusion, injection blow moulding or other forming techniques, preferably injection moulding.

14. Moulded body, in particular injection moulded article, obtainable from the polyamide molding compound according to one of the claims 1-10.

15. Moulded article according to claim 14, wherein it is a cellular telephone casing or cellular telephone housing part.

## Revendications

1. Masse de moulage en polyamide renforcées avec une résilience à l'impact élevée, contenant des polyamides partiellement aromatiques et des fibres de verre plates comme agent de renforcement, **caractérisées par**
- une matrice de polyamide (A) d'au moins un polyamide à point de fusion élevé, présentant un point de fusion DSC (ISO 11357) d'au moins 270°C, une stabilité des dimensions à chaud HDTA d'au moins 260°C lorsqu'elle présente un degré de renforcement d'au moins 50% en poids, et une viscosité en solution, mesurée dans du m-crésol (0,5% en poids, 20°C) ηᵣₑₗ inférieure à 1.9, en particulier inférieure à 1.8, de préférence formé à partir d'acides dicarboxyliques aromatiques et de diamines aliphatiques, une partie des acides dicarboxyliques aromatiques pouvant être remplacée par des acides dicarboxyliques aliphatiques et/ou cycloaliphatiques, une partie des diamines pouvant être remplacée par des diamine cycloaliphatiques et/ou araliphatiques, et une partie des acides dicarboxyliques et diamines pouvant être remplacée par des lactames et/ou acides aminocarboxyliques, et
- des charges (B) comprenant de fibres de verre plates présentant une configuration allongée, avec une section transversale dont l'axe transversal principal diffère de l'axe transversal secondaire (C) d'additifs et d'adjuvants,
- où les % en poids des composants (A) à (C) forment ensemble 100%.

2. Masses de moulage en polyamide renforcées avec une résilience à l'impact élevée, contenant des polyamides partiellement aromatiques et des fibres de verre plates comme agent de renforcement, **caractérisées par**
- une matrice de polyamide contenant les composants suivantes :
(A) 20 à 60% en poids d'au moins un polyamide à point de fusion élevé, présentant un point de fusion DSC (ISO 11357) d'au moins 270°C, formé à partir
(A₁) d'acides dicarboxyliques, contenant
- 50-100% en mole d'acide téréphtalique, par rapport à la teneur totale en acides dicarboxyliques présents,
- 0-50% en mole d'un autre acide dicarboxylique aromatique comprenant 8 à 20 atomes de carbone, par rapport à la teneur totale des acides,
- 0-50% en mole d'un acide dicarboxylique aliphatique comprenant 6 à 36 atomes de carbone,
- 0-50% en mole d'un acide dicarboxylique cycloaliphatique comprenant 8 à 20 atomes de carbone,
(A₂) de diamines, contenant
- 50-100% en mole d'au moins une diamine, choisie dans le groupe formé par la 1,6-hexanediamine, la 2-méthyl-1,5-pentanediamine, la 1,7-heptanediamine, la 1,8-octanediamine, la 1,11-undécanediamine, la 1,12-dodécanediamine, le MACM (3,3'-diméthyl-4,4'-diaminodicyclohexylméthane), le PACM (4,4'-diaminodicyclohexylméthane), le 1,3-bis-(aminométhyl)-cyclohexane et la MXDA (m-xylylènediamine), par rapport à la teneur totale en diamines présentes,
- 0-50% en mole d'autres diamines aliphatiques comprenant 6 à 18 atomes de carbone,
- 0-50% en mole de diamines cycloaliphatiques comprenant 6 à 20 atomes de carbone,
- 0-50% en mole de diamines araliphatiques MXDA, PXDA, et le cas échéant
(A₃) d'acides aminocarboxyliques et/ou de lactames, contenant
- 0-100% en mole de lactames comprenant 6 à 12 atomes de carbone,
- 0-100% en mole d'acides aminocarboxyliques comprenant 6 à 12 atomes de carbone,
où les composants (A₁) et (A₂) sont utilisés dans une large mesure en quantité équimolaire et la concentration en (A₃) ne passe pas au-dessous de 35% en poids de la somme de (A₁) à (A₃), et
(B) 40 à 80% de charges, comprenant:
(B₁) en poids de fibres de verre plates présentant une configuration allongée, où les fibres de verre présentent une section transversale non circulaire et un rapport des dimensions de l'axe transversal principal à l'axe transversal secondaire de 2 à 6, en particulier de 3 à 6, de manière tout particulièrement préférée de 3,5 à 5,0, ou un mélange des fibres de verre avec des fibres de carbone,
(B₂) 0-30% en poids de charges sous forme de particules ou de couches,
(B₃) 0-30% en poids de fibres de carbone et/ou de basalte et/ou de p-aramide ou de m-aramide
(B₄) 0-30% en poids de fibres de verre avec une section ronde, et
(C) 0 à 20% en poids d'additifs et d'adjuvants,
- où les % en poids des composants (A) à (C) forment ensemble 100%.

3. Masses de moulage en polyamide selon la revendication 1 ou 2, **caractérisées en ce que** les masses de moulage en polyamide ne contiennent pas de fibres de verre présentant une configuration allongée ou ovale ou courbée comportant au moins une section étranglée.

4. Masses de moulage en polyamide selon la revendication 1 à 3, **caractérisées en ce qu'**on utilise des fibres de verre plates présentant une section rectangulaire ou quasiment rectangulaire.

5. Masses de moulage en polyamide selon l'une quelconque des revendications 1 à 4, **caractérisées en ce que** les fibres de verre plates se trouvent sous forme de fibres de verre courtes (fibres découpées) présentant une longueur de 2 à 50 mm,
et/ou **en ce que** les fibres de verre plates se trouvent sous forme de fibres de verre longues (rovings - stratifils)
et/ou **en ce que** les fibres de verre plates sont contenues en des concentrations entre 48 et 75% en poids dans les masses de moulage
et/ou **en ce que** fibres de verre plates utilisées sous forme de fibres de verre courtes ou longues présentent un diamètre de l'axe transversal principal de 6 à 40 µm et un diamètre de l'axe transversal secondaire de 3 à 20 µm, le rapport des axes transversaux perpendiculaires l'un à l'autre se situant dans la plage de 3 à 6, de préférence entre 3,5 et 5,0,
et/ou **en ce que** les fibres de verre plates sont choisies dans le groupe des fibres de verre E, des fibres de verre A, des fibres de verre C, des fibres de verre D, des fibres de verre M, des fibres de verre S ou des fibres de verre R ou leurs mélanges, où les fibres de verre E et S sont préférées et où les fibres sont de manière particulièrement préférée pourvues d'un revêtement amino ou époxysilane.

6. Masses de moulage en polyamide selon l'une quelconque des revendications précédentes 1 à 5, **caractérisées en ce que** les fibres de verre plates se trouvent en mélange avec des fibres de carbone et ce, dans un rapport de mélange de fibres de verre/fibres de carbone d'un rapport pondéral de 70/30 à 97/3.

7. Masses de moulage en polyamide selon l'une quelconque des revendications 1 à 6, **caractérisées en ce qu'**au moins un polyamide partiellement aromatique, à point de fusion élevé, est choisi dans le groupe constitué par les polyamides PA 6T/6I, PA 6T/66, PA 6T/610, PA 6T/612, PA 6T/12, PA 6T/11, PA 6T/6, PA 6T/10T, PA 6T/10I, PA 6T/106, PA 6T/1010, PA 6T/66/106, PA 6T/MACM10, PA 6T/MACM12, PA 6T/MACM18, PA 6T/MACMI, PA MACMT/61, PA 6T/PACM6, PA 6T/PACM10, PA 6T/PACM12, PA 6T/PACM18, PA 6T/PACMI, PACMT/6I, PA MPT/MPI, PA MPT/MP6, PA 6T/MPI, PA 6T/9T, PA 6T/12T, PA 6T/6I/66, PA 6T/6I/6, PA 6T/6I/12, PA 6T/66/6, PA 6T/66/12, PA 6T/6I/MACMI, PA 6T/66/PACM6, ou leurs mélanges, combinaisons ou alliages
ou **en ce qu'**il est préparé à partir d'au moins 50% en mole d'acide téréphtalique et d'hexaméthylènediamine et/ou **en ce que** le polyamide partiellement aromatique est un polyamide partiellement cristallin 6T/6I, qui contient 50 à 80% en mole d'unités hexaméthylène-téréphtalamide et 20 à 50% en mole d'unités hexaméthylène-isophtalamide
Ou que le polyamide partiellement aromatique est un polyamide partiellement cristallin 6T/66, qui contient 50 à 80% en mole d'unités hexaméthylène-téréphtalamide et 20 à 50% en mole d'unités hexaméthylène-adipamide (66)
ou que que le polyamide partiellement aromatique est un polyamide ternaire partiellement cristallin 6T/6I/66, qui contient 50 à 70% en mole d'unités hexaméthylène-téréphtalamide, 5 à 45% en mole d'unités hexaméthylène-isophtalamide et 5 à 45% en mole d'hexaméthylène-adipamide (66)
ou que le polyamide partiellement aromatique est un PA 6T/6I/X partiellement cristallin, qui contient au moins 50% en mole d'unités hexaméthylène-téréphtalamide, et 0 à 40% en mole d'unités hexaméthylène-isophtalamide et 10 à 50% en mole d'unités aliphatiques de formule NH-(CH₂)ₙ₋₁-CO-, où n vaut 6, 11 ou 12
ou que le polyamide partiellement aromatique est un polyamide partiellement cristallin 6T/6I ou un polyamide 6T/66, qui contient au moins 52% en mole d'unités hexaméthylène-téréphtalamide
ou que le polyamide partiellement aromatique contient jusqu'à 26% en mole d'unités aliphatiques qui peuvent être préparées par condensation d'acides gras dimérisés comprenant jusqu'à 44 atomes de carbone et d'hexaméthylènediamine.

8. Masses de moulage en polyamide selon l'une quelconque des revendications précédentes 1 à 7, **caractérisées en ce que** les masses de moulage présentent des résiliences à l'impact d'au moins 23 kJ/m² (mesurées selon Charpy à 23°C selon la norme ISO 179/2-1 eA) à une proportion de fibres de verre ≥ 60% en poids ou une résilience à l'impact supérieure à 20 kJ/m² (mesurée selon Charpy à 23°C selon la norme ISO 179/2-1 eA) à une proportion de fibres de verre de 50 à 60% en poids.

9. Masses de moulage en polyamide selon l'une quelconque des revendications précédentes 1 à 8, **caractérisées par** une longueur d'écoulement élevée, en particulier dans le cas de pièces moulées par injection réalisées à partir des masses de moulage, à paroi mince > 120 mm à des degrés de renforcement avec le composant (B) dans la plage de 40% en poids à 65% en poids.

10. Masses de moulage en polyamide selon l'une quelconque des revendications 1 à 9, **caractérisées en ce que** sont contenus comme autres additifs et adjuvants (C) usuels dans les masses de moulage, ceux du groupe des stabilisateurs inorganiques, des stabilisateurs organiques, des lubrifiants, des colorants, des pigments métalliques, des paillettes de métal, des particules revêtues de métal, des agents ignifuges halogénés, des agents ignifuges exempts d'halogènes, des agents de modification de la résilience, des autres polymères tels que par exemple le poly(oxyde de phénylène), le poly(sulfure de phénylène), des antistatiques, des additifs conductibles, en particulier la suie et/ou des nanotubes de carbone, des agents de démoulage, des azurants optiques, des silicates à couches naturels, des silicates à couches synthétiques ou des mélanges des additifs susmentionnés, et **en ce que** de préférence les masses de moulage en polyamide renforcées contiennent comme agents ignifuges 5 à 20% en poids d'un composé phosphinate, en particulier 8 à 17,8% en poids d'un composé phosphinate et 0,2 à 10% en poids, d'un sel de polyphosphate d'un composé 1,3,5-triazinique.

11. Procédé pour la préparation des masses de moulage en polyamide selon l'une quelconque des revendications 1 à 24, sur des installations de compoundage usuelles à des températures des cylindres réglées de 280°C jusqu'à 350°C, où on fond d'abord la proportion polymère, puis on introduit les fibres de verre plates coupées ou le mélange de fibres de verre et de fibres de carbone et/ou les autres charges.

12. Utilisation des masses de moulage selon l'une quelconque des revendications 1 à 10 pour la production de corps façonnés **caractérisée en ce que** la masse de moulage présente une résilience à l'impact supérieure à 20 kJ/m² (mesurée selon Charpy à 23°C, selon la norme ISO 179/2-1 eA) et le corps façonné est notamment une pièce moulée par injection.

13. Procédé pour la production de corps façonnés à partir des masses de moulage en polyamide selon l'une quelconque des revendications 1 à 10, par moulage par injection, extrusion, pultrusion, soufflage par injection ou d'autres techniques de moulage, le moulage par injection étant particulièrement préféré.

14. Corps façonné, en particulier pièce moulée par injection, pouvant être obtenu à partir des masses de moulage en polyamide selon l'une ou plusieurs des revendications 1 à 10.

15. Corps façonné selon la revendication 14, **caractérisé en ce qu'**il s'agit d'un boîtier de téléphone mobile ou d'une partie d'un boîtier de téléphone mobile.
